(19)

Europäisches
Patentamt
European
Patent Office
Office européen
des brevets

(11) **EP 4 510 650 A2**

(12) **EUROPEAN PATENT APPLICATION**

(43) Date of publication:
**19.02.2025   Bulletin 2025/08**

(21) Application number: **25150026.0**

(22) Date of filing: **01.11.2022**

(51) International Patent Classification (IPC):
**H04W 4/46** (2018.01)

(52) Cooperative Patent Classification (CPC):
**H04W 28/0226; H04W 4/40; H04W 28/0231;
H04W 28/09; H04W 28/0983; H04W 28/0992**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **04.01.2022   US 202217646976**

(62) Document number(s) of the earlier application(s) in
accordance with Art. 76 EPC:
**22830066.1 / 4 460 994**

(71) Applicant: **QUALCOMM Incorporated
San Diego, CA 92121-1714 (US)**

(72) Inventors:
• **MASCHUE, Sean Vincent
San Diego, 92121-1714 (US)**
• **NEKOUI, Mohammad
San Diego, 92121-1714 (US)**
• **DAS, Soumya
San Diego, 92121-1714 (US)**
• **WHYTE, William
San Diego, 92121-1714 (US)**

(74) Representative: **Reddie & Grose LLP
The White Chapel Building
10 Whitechapel High Street
London E1 8QS (GB)**

Remarks:
This application was filed on 02-01-2025 as a
divisional application to the application mentioned
under INID code 62.

(54) **EFFICIENT PATH HISTORY AND FULL CERTIFICATE INCLUSION IN SAFETY MESSAGES**

(57)     This disclosure provides systems, methods, and devices for wireless communication that support enhanced Basic Safety Message (BSM) reporting. A method of wireless communication includes receiving, by a wireless communication device, a C-V2X message from another wireless communication device; and transmitting, by the wireless communication device, a safety message including certificate information responsive to determining a certificate information trigger condition is satisfied based on the C-V2X message. Other aspects and features are also claimed and described.

FIG. 4

EP 4 510 650 A2

**Description**

**CROSS-REFERENCE TO RELATED APPLICATIONS**

This application claims the benefit of U.S. Patent Application No. 17/646,976, entitled, "EFFICIENT PATH HISTORY AND FULL CERTIFICATE INCLUSION IN SAFETY MESSAGES ," filed on January 4, 2022, which is expressly incorporated by reference herein in its entirety.

**TECHNICAL FIELD**

Aspects of the present disclosure relate generally to wireless communication systems, and more particularly, to device-to-device communications. Some features may enable and provide improved communications, including enhanced safety message, such as Basic Safety Message (BSM), reporting operations.

**INTRODUCTION**

Wireless communication networks are widely deployed to provide various communication services such as voice, video, packet data, messaging, broadcast, and the like. These wireless networks may be multiple-access networks capable of supporting multiple users by sharing the available network resources. Such networks may be multiple access networks that support communications for multiple users by sharing the available network resources.

A wireless communication network may include several components. These components may include wireless communication devices, such as base stations (or node Bs) that may support communication for a number of user equipments (UEs). A UE may communicate with a base station via downlink and uplink. The downlink (or forward link) refers to the communication link from the base station to the UE, and the uplink (or reverse link) refers to the communication link from the UE to the base station.

A base station may transmit data and control information on a downlink to a UE or may receive data and control information on an uplink from the UE. On the downlink, a transmission from the base station may encounter interference due to transmissions from neighbor base stations or from other wireless radio frequency (RF) transmitters. On the uplink, a transmission from the UE may encounter interference from uplink transmissions of other UEs communicating with the neighbor base stations or from other wireless RF transmitters. This interference may degrade performance on both the downlink and uplink.

As the demand for mobile broadband access continues to increase, the possibilities of interference and congested networks grows with more UEs accessing the long-range wireless communication networks and more short-range wireless systems being deployed in communities. Research and development continue to advance wireless technologies not only to meet the growing demand for mobile broadband access, but to advance and enhance the user experience with mobile communications.

**BRIEF SUMMARY OF SOME EXAMPLES**

The following summarizes some aspects of the present disclosure to provide a basic understanding of the discussed technology. This summary is not an extensive overview of all contemplated features of the disclosure and is intended neither to identify key or critical elements of all aspects of the disclosure nor to delineate the scope of any or all aspects of the disclosure. Its sole purpose is to present some concepts of one or more aspects of the disclosure in summary form as a prelude to the more detailed description that is presented later.

In one aspect of the disclosure, a method for wireless communication includes receiving, by a wireless communication device, a C-V2X message from another wireless communication device; and transmitting, by the wireless communication device, a safety message including path history information responsive to determining a path history information trigger condition is satisfied based on the C-V2X message.

In another aspect of the disclosure, an apparatus for wireless communication includes a processor; and a memory coupled to the processor, the memory storing instructions which when executed by the processor cause the processor to: receive a C-V2X message from a wireless communication device; and transmit a safety message including path history information responsive to determining a path history information trigger condition is satisfied based on the C-V2X message.

In one aspect of the disclosure, a method for wireless communication includes receiving, by a wireless communication device, a C-V2X message from another wireless communication device; and transmitting, by the wireless communication device, a safety message including certificate information responsive to determining a certificate information trigger condition is satisfied based on the C-V2X message.

In another aspect of the disclosure, an apparatus for wireless communication includes a processor; and a memory coupled to the processor, the memory storing instructions which when executed by the processor cause the processor to: receive a C-V2X message from a wireless communication device; and transmit a safety message including certificate information responsive to determining a certificate information trigger condition is satisfied based on the C-V2X message.

The foregoing has outlined rather broadly the features and technical advantages of examples according to the disclosure in order that the detailed description that follows may be better understood. Additional features and advantages will be described hereinafter. The conception and specific examples disclosed may be readily utilized as a basis for modifying or designing other structures for carrying out the same purposes of the present disclosure. Such equivalent constructions do not depart from the scope of the appended claims. Characteristics of the concepts disclosed herein, both their organization and method of operation, together with associated advantages will be better understood from the following description when considered in connection with the accompanying figures. Each of the figures is provided for the purposes of illustration and description, and not as a definition of the limits of the claims.

While aspects and implementations are described in this application by illustration to some examples, those skilled in the art will understand that additional implementations and use cases may come about in many different arrangements and scenarios. Innovations described herein may be implemented across many differing platform types, devices, systems, shapes, sizes, packaging arrangements. For example, aspects and/or uses may come about via integrated chip implementations and other non-module-component based devices (e.g., end-user devices, vehicles, communication devices, computing devices, industrial equipment, retail/-purchasing devices, medical devices, artificial intelligence (AI)-enabled devices, etc.). While some examples may or may not be specifically directed to use cases or applications, a wide assortment of applicability of described innovations may occur. Implementations may range in spectrum from chip-level or modular components to non-modular, non-chip-level implementations and further to aggregate, distributed, or original equipment manufacturer (OEM) devices or systems incorporating one or more aspects of the described innovations. In some practical settings, devices incorporating described aspects and features may also necessarily include additional components and features for implementation and practice of claimed and described aspects. For example, transmission and reception of wireless signals necessarily includes a number of components for analog and digital purposes (e.g., hardware components including antenna, radio frequency (RF)-chains, power amplifiers, modulators, buffer, processor(s), interleaver, adders/summers, etc.). It is intended that innovations described herein may be practiced in a wide variety of devices, chip-level components, systems, distributed arrangements, end-user devices, etc. of varying sizes, shapes, and constitution.

## BRIEF DESCRIPTION OF THE DRAWINGS

A further understanding of the nature and advantages of the present disclosure may be realized by reference to the following drawings. In the appended figures, similar components or features may have the same reference label. Further, various components of the same type may be distinguished by following the reference label by a dash and a second label that distinguishes among the similar components. If just the first reference label is used in the specification, the description is applicable to any one of the similar components having the same first reference label irrespective of the second reference label.

FIG. 1 is a block diagram illustrating details of an example wireless communication system according to one or more aspects.

FIG. 2 is a block diagram illustrating examples of a base station and a user equipment (UE) according to one or more aspects.

FIG. 3A is a diagram of a device-to-device communication system.

FIG. 3B is an example diagram illustrating device-to-device communication.

FIG. 4 is a block diagram illustrating an example wireless communication system that supports enhanced safety message reporting operations according to one or more aspects.

FIG. 5 is a diagram illustrating an example wireless communication system that supports enhanced safety message reporting operations according to one or more aspects.

FIG. 6 is a flow diagram illustrating an example process that supports enhanced safety message reporting operations according to one or more aspects.

FIG. 7 is a flow diagram illustrating an example process that supports enhanced safety message reporting operations according to one or more aspects.

FIG. 8 is a block diagram of an example UE that supports enhanced safety message reporting operation according to one or more aspects.

Like reference numbers and designations in the various drawings indicate like elements.

## DETAILED DESCRIPTION

The detailed description set forth below, in connection with the appended drawings, is intended as a description of various configurations and is not intended to limit the scope of the disclosure. Rather, the detailed description includes specific details for the purpose of providing a thorough understanding of the inventive subject matter. It will be apparent to those skilled in the art that these specific details are not required in every case and that, in some instances, well-known structures and components are shown in block diagram form for clarity of presentation.

This disclosure relates generally to providing or participating in authorized shared access between two or more wireless devices in one or more wireless communications systems, also referred to as wireless communications networks. In various implementations, the techniques and apparatus may be used for wireless communication networks such as code division multiple access (CDMA) networks, time division multiple access (TDMA) networks, frequency division multiple access (FDMA) networks, orthogonal FDMA (OFDMA) networks, single-carrier FDMA (SC-FDMA) networks, LTE networks, GSM networks, $5^{th}$ Generation (5G) or new radio (NR) networks (sometimes referred to as "5G NR" networks, systems, or devices), as well as other communications networks. As described herein, the terms "networks" and "systems" may be used interchangeably.

A CDMA network, for example, may implement a radio technology such as universal terrestrial radio access (UTRA), cdma2000, and the like. UTRA includes wideband-CDMA (W-CDMA) and low chip rate (LCR). CDMA2000 covers IS-2000, IS-95, and IS-856 standards.

A TDMA network may, for example implement a radio technology such as Global System for Mobile Communication (GSM). The 3rd Generation Partnership Project (3GPP) defines standards for the GSM EDGE (enhanced data rates for GSM evolution) radio access network (RAN), also denoted as GERAN. GERAN is the radio component of GSM/EDGE, together with the network that joins the base stations (for example, the Ater and Abis interfaces) and the base station controllers (A interfaces, etc.). The radio access network represents a component of a GSM network, through which phone calls and packet data are routed from and to the public switched telephone network (PSTN) and Internet to and from subscriber handsets, also known as user terminals or user equipments (UEs). A mobile phone operator's network may comprise one or more GERANs, which may be coupled with UTRANs in the case of a UMTS/GSM network. Additionally, an operator network may also include one or more LTE networks, or one or more other networks. The various different network types may use different radio access technologies (RATs) and RANs.

An OFDMA network may implement a radio technology such as evolved UTRA (E-UTRA), Institute of Electrical and Electronics Engineers (IEEE) 802.11, IEEE 802.16, IEEE 802.20, flash-OFDM and the like. UTRA, E-UTRA, and GSM are part of universal mobile telecommunication system (UMTS). In particular, long term evolution (LTE) is a release of UMTS that uses E-UTRA. UTRA, E-UTRA, GSM, UMTS and LTE are described in documents provided from an organization named "3rd Generation Partnership Project" (3GPP), and cdma2000 is described in documents from an organization named "3rd Generation Partnership Project 2" (3GPP2). These various radio technologies and standards are known or are being developed. For example, the 3GPP is a collaboration between groups of telecommunications associations that aims to define a globally applicable third generation (3G) mobile phone specification. 3GPP LTE is a 3GPP project which was aimed at improving UMTS mobile phone standard. The 3GPP may define specifications for the next generation of mobile networks, mobile systems, and mobile devices. The present disclosure may describe certain aspects with reference to LTE, 4G, or 5G NR technologies; however, the description is not intended to be limited to a specific technology or application, and one or more aspects described with reference to one technology may be understood to be applicable to another technology. Additionally, one or more aspects of the present disclosure may be related to shared access to wireless spectrum between networks using different radio access technologies or radio air interfaces.

5G networks contemplate diverse deployments, diverse spectrum, and diverse services and devices that may be implemented using an OFDM-based unified, air interface. To achieve these goals, further enhancements to LTE and LTE-A are considered in addition to development of the new radio technology for 5G NR networks. The 5G NR will be capable of scaling to provide coverage (1) to a massive Internet of things (IoTs) with an ultra-high density (e.g., ~1 M nodes/km$^2$), ultra-low complexity (e.g., ~10 s of bits/sec), ultra-low energy (e.g., ~10+ years of battery life), and deep coverage with the capability to reach challenging locations; (2) including mission-critical control with strong security to safeguard sensitive personal, financial, or classified information, ultra-high reliability (e.g., ~99.9999% reliability), ultra-low latency (e.g., ~ 1 millisecond (ms)), and users with wide ranges of mobility or lack thereof; and (3) with enhanced mobile broadband including extreme high capacity (e.g., ~ 10 Tbps/km$^2$), extreme data rates (e.g., multi-Gbps rate, 100+ Mbps user experienced rates), and deep awareness with advanced discovery and optimizations.

Devices, networks, and systems may be configured to communicate via one or more portions of the electromagnetic spectrum. The electromagnetic spectrum is often subdivided, based on frequency or wavelength, into various classes, bands, channels, etc. In 5G NR two initial operating bands have been identified as frequency range designations FR1 (410 MHz - 7.125 GHz) and FR2 (24.25 GHz - 52.6 GHz). The frequencies between FR1 and FR2 are often referred to as mid-band frequencies. Although a portion of FR1 is greater than 6 GHz, FR1 is often referred to (interchangeably) as a "sub-6 GHz" band in various documents and articles. A similar nomenclature issue sometimes occurs with regard to FR2, which is often referred to (interchangeably) as a "millimeter wave" (mmWave) band in documents and articles, despite being different from the extremely high frequency (EHF) band (30 GHz - 300 GHz) which is identified by the International Telecommunications Union (ITU) as a "mmWave" band.

With the above aspects in mind, unless specifically stated otherwise, it should be understood that the term "sub-6 GHz" or the like if used herein may broadly represent frequencies that may be less than 6 GHz, may be within FR1, or may include mid-band frequencies. Further, unless specifically stated otherwise, it should be understood that the term "mmWave" or the like if used herein may broadly represent frequencies that may include mid-band frequencies, may be within FR2, or may be within the EHF band.

5G NR devices, networks, and systems may be implemented to use optimized OFDM-based waveform features. These features may include scalable numerology and transmission time intervals (TTIs); a common, flexible framework to efficiently multiplex services and features with a dynamic, low-latency time division duplex (TDD) design or frequency division duplex (FDD) design; and advanced wireless technologies, such as massive multiple input, multiple output (MIMO), robust mmWave transmissions, advanced channel coding, and device-centric mobility. Scalability of the numerology in 5G NR, with scaling of subcarrier spacing, may efficiently address operating diverse services across diverse spectrum and diverse deployments. For example, in various outdoor and macro coverage deployments of less than 3 GHz FDD or TDD implementations, subcarrier spacing may occur with 15 kHz, for example over 1, 5, 10, 20 MHz, and the like bandwidth. For other various outdoor and small cell coverage deployments of TDD greater than 3 GHz, subcarrier spacing may occur with 30 kHz over 80/100 MHz bandwidth. For other various indoor wideband implementations, using a TDD over the unlicensed portion of the 5 GHz band, the subcarrier spacing may occur with 60 kHz over a 160 MHz bandwidth. Finally, for various deployments transmitting with mmWave components at a TDD of 28 GHz, subcarrier spacing may occur with 120 kHz over a 500 MHz bandwidth.

The scalable numerology of 5G NR facilitates scalable TTI for diverse latency and quality of service (QoS) requirements. For example, shorter TTI may be used for low latency and high reliability, while longer TTI may be used for higher spectral efficiency. The efficient multiplexing of long and short TTIs to allow transmissions to start on symbol boundaries. 5G NR also contemplates a self-contained integrated subframe design with uplink or downlink scheduling information, data, and acknowledgement in the same subframe. The self-contained integrated subframe supports communications in unlicensed or contention-based shared spectrum, adaptive uplink or downlink that may be flexibly configured on a per-cell basis to dynamically switch between uplink and downlink to meet the current traffic needs.

For clarity, certain aspects of the apparatus and techniques may be described below with reference to example 5G NR implementations or in a 5G-centric way, and 5G terminology may be used as illustrative examples in portions of the description below; however, the description is not intended to be limited to 5G applications.

Moreover, it should be understood that, in operation, wireless communication networks adapted according to the concepts herein may operate with any combination of licensed or unlicensed spectrum depending on loading and availability. Accordingly, it will be apparent to a person having ordinary skill in the art that the systems, apparatus and methods described herein may be applied to other communications systems and applications than the particular examples provided.

While aspects and implementations are described in this application by illustration to some examples, those skilled in the art will understand that additional implementations and use cases may come about in many different arrangements and scenarios. Innovations described herein may be implemented across many differing platform types, devices, systems, shapes, sizes, packaging arrangements. For example, implementations or uses may come about via integrated chip implementations or other non-module-component based devices (e.g., end-user devices, vehicles, communication devices, computing devices, industrial equipment, retail devices or purchasing devices, medical devices, AI-enabled devices, etc.). While some examples may or may not be specifically directed to use cases or applications, a wide assortment of applicability of described innovations may occur. Implementations may range from chip-level or modular components to non-modular, non-chip-level implementations and further to aggregated, distributed, or original equipment manufacturer (OEM) devices or systems incorporating one or more described aspects. In some practical settings, devices incorporating described aspects and features may also necessarily include additional components and features for implementation and practice of claimed and described aspects. It is intended that innovations described herein may be practiced in a wide variety of implementations, including both large devices or small devices, chip-level components, multi-component systems (e.g., radio frequency (RF)-chain, communication interface, processor), distributed arrangements, end-user devices, etc. of varying sizes, shapes, and constitution.

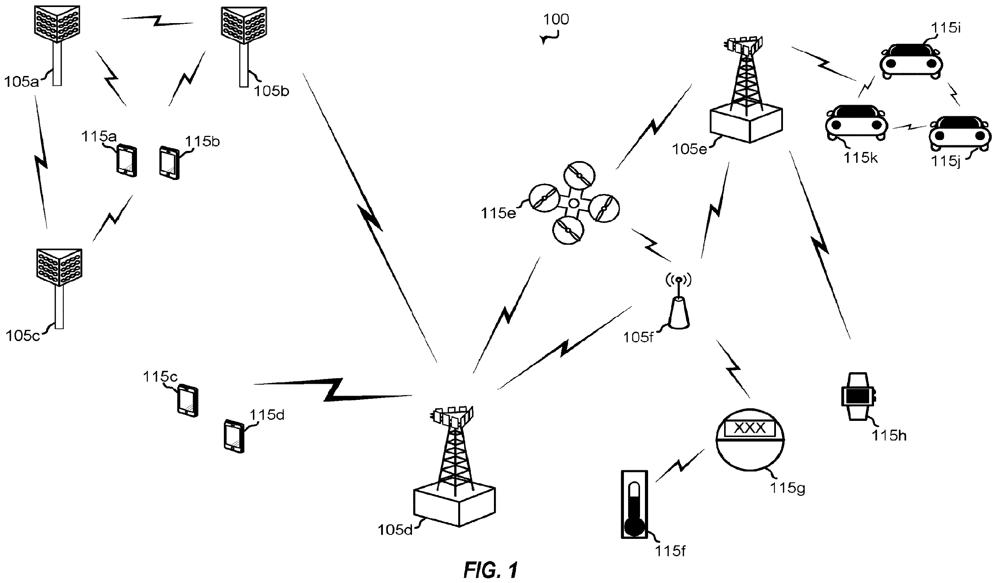

FIG. 1 is a block diagram illustrating details of an example wireless communication system according to one or more aspects. The wireless communication system may include wireless network 100. Wireless network 100 may, for example, include a 5G wireless network. As appreciated by those skilled in the art, components appearing in FIG. 1 are likely to have related counterparts in other network arrangements including, for example, cellular-style network arrangements and non-cellular-style-network arrangements (e.g., device to device or peer to peer or ad hoc network arrangements, etc.).

Wireless network 100 illustrated in FIG. 1 includes a number of base stations 105 and other network entities. A base station may be a station that communicates with the UEs and may also be referred to as an evolved node B (eNB), a next generation eNB (gNB), an access point, and the like. Each base station 105 may provide communication coverage for a particular geographic area. In 3GPP, the term "cell" may refer to this particular geographic coverage area of a base station or a base station subsystem serving the coverage area, depending on the context in which the term is used. In implementations of wireless network 100 herein, base stations 105 may be associated with a same operator or different operators (e.g., wireless network 100 may include a plurality of operator wireless networks). Additionally, in implementations of wireless network 100 herein, base station 105 may provide wireless communications using one or more of the same frequencies (e.g., one or more frequency bands in licensed spectrum, unlicensed spectrum, or a combination thereof) as a neighboring cell. In some examples, an individual base station 105 or UE 115 may be operated by more than one network operating entity. In some other examples, each base station 105 and UE 115 may be operated by a single network operating entity.

A base station may provide communication coverage for a macro cell or a small cell, such as a pico cell or a femto cell, or other types of cell. A macro cell generally covers a relatively large geographic area (e.g., several kilometers in radius) and may allow unrestricted access by UEs with service subscriptions with the network provider. A small cell, such as a pico cell, would generally cover a relatively smaller geographic area and may allow unrestricted access by UEs with service subscriptions with the network provider. A small cell, such as a femto cell, would also generally cover a relatively small geographic area (e.g., a home) and, in addition to unrestricted access, may also provide restricted access by UEs having an association with the femto cell (e.g., UEs in a closed subscriber group (CSG), UEs for users in the home, and the like). A base station for a macro cell may be referred to as a macro base station. A base station for a small cell may be referred to as a small cell base station, a pico base station, a femto base station or a home base station. In the example shown in FIG. 1, base stations 105d and 105e are regular macro base stations, while base stations 105a-105c are macro base stations enabled with one of 3 dimension (3D), full dimension (FD), or massive MIMO. Base stations 105a-105c take advantage of their higher dimension MIMO capabilities to exploit 3D beamforming in both elevation and azimuth beamforming to increase coverage and capacity. Base station 105f is a small cell base station which may be a home node or portable access point. A base station may support one or multiple (e.g., two, three, four, and the like) cells.

Wireless network 100 may support synchronous or asynchronous operation. For synchronous operation, the base stations may have similar frame timing, and transmissions from different base stations may be approximately aligned in time. For asynchronous operation, the base stations may have different frame timing, and transmissions from different base stations may not be aligned in time. In some scenarios, networks may be enabled or configured to handle dynamic switching between synchronous or asynchronous operations.

UEs 115 are dispersed throughout the wireless network 100, and each UE may be stationary or mobile. It should be appreciated that, although a mobile apparatus is commonly referred to as a UE in standards and specifications promulgated by the 3GPP, such apparatus may additionally or otherwise be referred to by those skilled in the art as a mobile station (MS), a subscriber station, a mobile unit, a subscriber unit, a wireless unit, a remote unit, a mobile device, a wireless device, a wireless communications device, a remote device, a mobile subscriber station, an access terminal (AT), a mobile terminal, a wireless terminal, a remote terminal, a handset, a terminal, a user agent, a mobile client, a client, a gaming device, an augmented reality device, vehicular component, vehicular device, or vehicular module, or some other suitable terminology. Within the present document, a "mobile" apparatus or UE need not necessarily have a capability to move, and may be stationary. Some non-limiting examples of a mobile apparatus, such as may include implementations of one or more of UEs 115, include a mobile, a cellular (cell) phone, a smart phone, a session initiation protocol (SIP) phone, a wireless local loop (WLL) station, a laptop, a personal computer (PC), a notebook, a netbook, a smart book, a tablet, and a personal digital assistant (PDA). A mobile apparatus may additionally be an IoT or "Internet of everything" (IoE) device such as an automotive or other transportation vehicle, a satellite radio, a global positioning system (GPS) device, a global navigation satellite system (GNSS) device, a logistics controller, a drone, a multi-copter, a quad-copter, a smart energy or security device, a solar panel or solar array, municipal lighting, water, or other infrastructure; industrial automation and enterprise devices; consumer and wearable devices, such as eyewear, a wearable camera, a smart watch, a health or fitness tracker, a mammal implantable device, gesture tracking device, medical device, a digital audio player (e.g., MP3 player), a camera, a game console, etc.; and digital home or smart home devices such as a home audio, video, and multimedia device, an appliance, a sensor, a vending machine, intelligent lighting, a home security system, a smart meter, etc. In one aspect, a UE may be a device that includes a Universal Integrated Circuit Card (UICC). In another aspect, a UE may be a device that does not include a UICC. In some aspects, UEs that do not include UICCs may also be referred to as IoE devices. UEs 115a-115d of the implementation illustrated in FIG. 1 are examples of mobile smart phone-type devices accessing wireless network 100 A UE may also be a machine specifically configured for connected communication, including machine type communication (MTC), enhanced MTC (eMTC), narrowband IoT (NB-IoT) and the like. UEs 115e-115k illustrated in FIG. 1 are examples of various machines configured for communication that access wireless network 100.

A mobile apparatus, such as UEs 115, may be able to communicate with any type of the base stations, whether macro base stations, pico base stations, femto base stations, relays, and the like. In FIG. 1, a communication link (represented as a lightning bolt) indicates wireless transmissions between a UE and a serving base station, which is a base station designated to serve the UE on the downlink or uplink, or desired transmission between base stations, and backhaul transmissions between base stations. UEs may operate as base stations or other network nodes in some scenarios. Backhaul communication between base stations of wireless network 100 may occur using wired or wireless communication links.

In operation at wireless network 100, base stations 105a-105c serve UEs 115a and 115b using 3D beamforming and coordinated spatial techniques, such as coordinated multipoint (CoMP) or multi-connectivity. Macro base station 105d performs backhaul communications with base stations 105a-105c, as well as small cell, base station 105f. Macro base station 105d also transmits multicast services which are subscribed to and received by UEs 115c and 115d. Such multicast services may include mobile television or stream video, or may include other services for providing community information, such as weather emergencies or alerts, such as Amber alerts or gray alerts.

Wireless network 100 of implementations supports mission critical communications with ultra-reliable and redundant links for mission critical devices, such UE 115e, which is a drone. Redundant communication links with UE 115e include from macro base stations 105d and 105e, as well as small cell base station 105f. Other machine type devices, such as UE 115f (thermometer), UE 115g (smart meter), and UE 115h (wearable device) may communicate through wireless network 100 either directly with base stations, such as small cell base station 105f, and macro base station 105e, or in multi-hop configurations by communicating with another user device which relays its information to the network, such as UE 115f communicating temperature measurement information to the smart meter, UE 115g, which is then reported to the network through small cell base station 105f. Wireless network 100 may also provide additional network efficiency through dynamic, low-latency TDD communications or low-latency FDD communications, such as in a vehicle-to-vehicle (V2V) mesh network between UEs 115i-115k communicating with macro base station 105e.

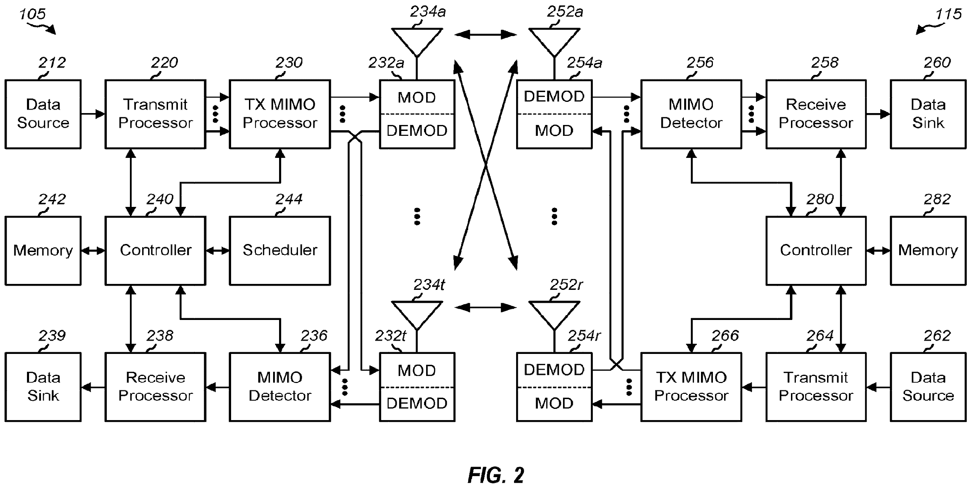

FIG. 2 is a block diagram illustrating examples of base station 105 and UE 115 according to one or more aspects. Base station 105 and UE 115 may be any of the base stations and one of the UEs in FIG. 1. For a restricted association scenario (as mentioned above), base station 105 may be small cell base station 105f in FIG. 1, and UE 115 may be UE 115c or 115d operating in a service area of base station 105f, which in order to access small cell base station 105f, would be included in a list of accessible UEs for small cell base station 105f. Base station 105 may also be a base station of some other type. As shown in FIG. 2, base station 105 may be equipped with antennas 234a through 234t, and UE 115 may be equipped with antennas 252a through 252r for facilitating wireless communications.

At base station 105, transmit processor 220 may receive data from data source 212 and control information from controller 240, such as a processor.

The control information may be for a physical broadcast channel (PBCH), a physical control format indicator channel (PCFICH), a physical hybrid-ARQ (automatic repeat request) indicator channel (PHICH), a physical downlink control channel (PDCCH), an enhanced physical downlink control channel (EPDCCH), an MTC physical downlink control channel (MPDCCH), etc. The data may be for a physical downlink shared channel (PDSCH), etc. Additionally, transmit processor 220 may process (e.g., encode and symbol map) the data and control information to obtain data symbols and control symbols, respectively. Transmit processor 220 may also generate reference symbols, e.g., for the primary synchronization signal (PSS) and secondary synchronization signal (SSS), and cell-specific reference signal. Transmit (TX) MIMO processor 230 may perform spatial processing (e.g., precoding) on the data symbols, the control symbols, or the reference symbols, if applicable, and may provide output symbol streams to modulators (MODs) 232a through 232t. For example, spatial processing performed on the data symbols, the control symbols, or the reference symbols may include precoding. Each modulator 232 may process a respective output symbol stream (e.g., for OFDM, etc.) to obtain an output sample stream. Each modulator 232 may additionally or alternatively process (e.g., convert to analog, amplify, filter, and upconvert) the output sample stream to obtain a downlink signal. Downlink signals from modulators 232a through 232t may be transmitted via antennas 234a through 234t, respectively.

At UE 115, antennas 252a through 252r may receive the downlink signals from base station 105 and may provide received signals to demodulators (DEMODs) 254a through 254r, respectively. Each demodulator 254 may condition (e.g., filter, amplify, downconvert, and digitize) a respective received signal to obtain input samples. Each demodulator 254 may further process the input samples (e.g., for OFDM, etc.) to obtain received symbols. MIMO detector 256 may obtain received symbols from demodulators 254a through 254r, perform MIMO detection on the received symbols if applicable, and provide detected symbols. Receive processor 258 may process (e.g., demodulate, deinterleave, and decode) the detected symbols, provide decoded data for UE 115 to data sink 260, and provide decoded control information to controller 280, such as a processor.

On the uplink, at UE 115, transmit processor 264 may receive and process data (e.g., for a physical uplink shared channel (PUSCH)) from data source 262 and control information (e.g., for a physical uplink control channel (PUCCH)) from controller 280. Additionally, transmit processor 264 may also generate reference symbols for a reference signal. The symbols from transmit processor 264 may be precoded by TX MIMO processor 266 if applicable, further processed by modulators 254a through 254r (e.g., for SC-FDM, etc.), and transmitted to base station 105. At base station 105, the uplink signals from UE 115 may be received by antennas 234, processed by demodulators 232, detected by MIMO detector 236 if applicable, and further processed by receive processor 238 to obtain decoded data and control information sent by UE 115. Receive processor 238 may provide the decoded data to data sink 239 and the decoded control information to controller 240.

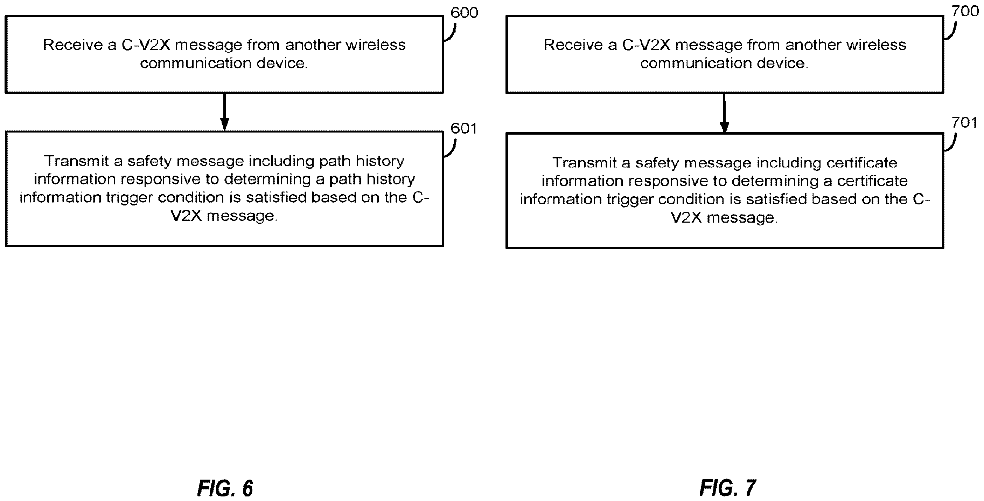

Controllers 240 and 280 may direct the operation at base station 105 and UE 115, respectively. Controller 240 or other processors and modules at base station 105 or controller 280 or other processors and modules at UE 115 may perform or direct the execution of various processes for the techniques described herein, such as to perform or direct the execution illustrated in FIGS. 6 and 7, or other processes for the techniques described herein. Memories 242 and 282 may store data and program codes for base station 105 and UE 115, respectively. Scheduler 244 may schedule UEs for data transmission on the downlink or the uplink.

In some cases, UE 115 and base station 105 may operate in a shared radio frequency spectrum band, which may include licensed or unlicensed (e.g., contention-based) frequency spectrum. In an unlicensed frequency portion of the shared radio frequency spectrum band, UEs 115 or base stations 105 may traditionally perform a medium-sensing procedure to contend for access to the frequency spectrum. For example, UE 115 or base station 105 may perform a listen-before-talk or listen-before-transmitting (LBT) procedure such as a clear channel assessment (CCA) prior to communicating in order to determine whether the shared channel is available. In some implementations, a CCA may include an energy detection procedure to determine whether there are any other active transmissions. For example, a device may infer that a change in a received signal strength indicator (RSSI) of a power meter indicates that a channel is occupied. Specifically, signal power that is concentrated in a certain bandwidth and exceeds a predetermined noise floor may indicate another wireless transmitter. A CCA also may include detection of specific sequences that indicate use of the channel. For example, another device may transmit a specific preamble prior to transmitting a data sequence. In some cases, an LBT procedure may include a wireless node adjusting its own backoff window based on the amount of energy detected on a channel or the acknowledge/negative-acknowledge (ACK/NACK) feedback for its own transmitted packets as a proxy for collisions.

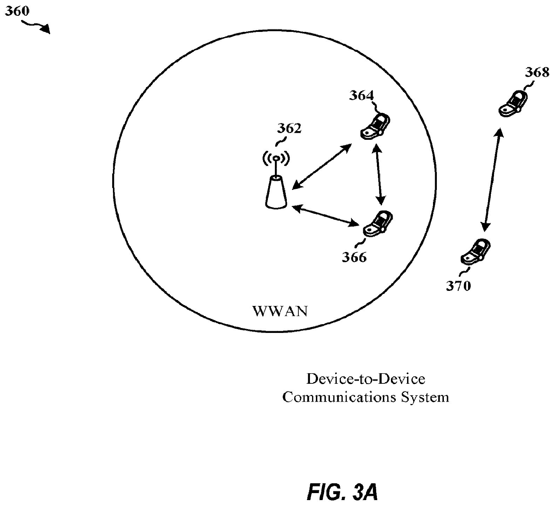

FIG. 3A is a diagram of a device-to-device (D2D) communications system 360. The D2D communications system 360 includes a plurality of UEs 364, 366, 368, 370. The D2D communications system 360 may overlap with a cellular communications system, such as for example, a WWAN. Some of the UEs 364, 366, 368, 370 may communicate together in D2D communication using the DL/UL WWAN spectrum, some may communicate with the base station 362, and some may do both. For example, as shown in FIG. 3A, the UEs 368, 370 are in D2D communication and the UEs 364, 366 are in D2D communication. The UEs 364, 366 are also communicating with the base station 362. The D2D communication may be through one or more sidelink channels, such as a physical sidelink broadcast channel (PSBCH), a physical sidelink discovery channel (PSDCH), a physical sidelink shared channel (PSSCH), and a physical sidelink control channel (PSCCH).

The exemplary methods and apparatuses discussed *infra* are applicable to any of a variety of wireless D2D communications systems, such as for example, a wireless device-to-device communication system based on NR, LTE, FlashLinQ, WiMedia, Bluetooth, ZigBee, or Wi-Fi based on the IEEE 802.11 standard. To simplify the discussion, the exemplary methods and apparatus are discussed within the context of NR. However, one of ordinary skill in the art would understand that the exemplary methods and apparatuses are applicable more generally to a variety of other wireless device-to-device communication systems.

D2D communication may be used to provide direct communication between devices. D2D communication enables one device to communicate with another device and transmit data to the other device over allocated resources. One use for the D2D communication is a vehicle-to-vehicle (V2V) communication and vehicle-to-everything (V2X) communication. Thus, according to the V2V communication, a first vehicle's device may perform D2D communication with another vehicle's device. According to the V2X communication, a vehicle's device may perform D2D communication with another device, regardless of whether that the device resides in a vehicle or not.

One type of communication that may be used for V2V communication is dedicated short range communication (DSRC). The DSRC is a short-range wireless communication capability, typically based on IEEE 802.11p that is similar to Wi-FI. In the DSRC, before transmission, a device may examine a channel. For transportation-related communications (e.g., V2X communication), 5.9 GHz unlicensed spectrum is generally reserved to communicate intelligent transportation services (ITS). Recently, implementing other types of communication such as NR communication for V2V communication have been under development. For example, NR D2D may be utilized for V2V communication, over a licensed spectrum and/or an unlicensed spectrum.

In a vehicle-to-everything (V2X) wireless communication system, UEs may communicate directly using device-to-device communication, also known as sidelink communication, without using a network entity (e.g., base station) as an intermediary. In some cases, a UE may operate using a particular transmission mode, such as transmission mode 4, where resource selection and/or scheduling is performed by the UE rather than a network entity (e.g., base station). In some aspects, the UE may perform resource selection and/or scheduling by measuring one or more sidelink channels, by decoding sidelink control information (SCI) that indicates channel availability, by determining a channel busy rate (CBR) associated with various sidelink channels, and/or the like.

In transmission mode 4, a UE may generate sidelink grants, and may transmit the sidelink grants in SCI. A sidelink grant may indicate, for example, one or more parameters (e.g., transmission parameters) to be used for an upcoming V2X transmission (e.g., a V2X data transmission), such as one or more resource blocks to be used for the upcoming V2X transmission, one or more subframes to be used for the upcoming V2X transmission, a modulation and coding scheme (MCS) to be used for the upcoming V2X transmission, and/or the like.

In V2X communication systems, conditions of the sidelink channel used to carry V2X communications can vary widely and change quickly due to the high mobility of vehicles and UEs associated with the vehicles, large variations in vehicle traffic at different times of day and in different locations, a wide variety of topographies that the vehicles may traverse (e.g., dense urban environments, hilly environments, flat environments, etc.), and/or the like. Furthermore, V2X communication systems need to be highly reliable due to mission critical safety issues associated with, for example, autonomous vehicles. Some techniques and apparatuses described herein improve performance of V2X communication systems by dynamically determining parameters for V2X transmissions based at least in part on dynamic factors associated with one or more vehicles, the sidelink channel, and/or the like.

In some aspects, V2X transmissions may be one-to-many broadcast and/or multicast transmissions. In some aspects, V2X transmissions may not require any physical layer feedback from receiving devices, such as acknowledgement (ACK) or negative acknowledgement (NACK) feedback. In some aspects, V2X transmissions may be configured without retransmission. In some aspects, V2X transmissions may be configured with a number of retransmissions (e.g., five retransmissions). In a particular aspect, the retransmission occur automatically, such as without ACK/NACK feedback.

A first UE may communicate with a second UE (and one or more other UEs) using device-to-device (D2D) communications via one or more sidelink channels. In some aspects, the UEs may correspond to one or more other UEs described elsewhere herein. The UEs may transmit V2X communications using the sidelink channel.

The sidelink channel may include a physical sidelink control channel (PSCCH) and a physical sidelink shared channel (PSSCH). The sidelink channel may optionally include a physical sidelink feedback channel (PSFCH). The PSCCH may be used to communicate control information, similar to a physical downlink control channel (PDCCH) and/or a physical uplink control channel (PUCCH) used for communications with a base station. The PSSCH may be used to communicate data, similar to a physical downlink shared channel (PDSCH) and/or a physical uplink shared channel (PUSCH) used for communications with a base station. For example, the PSCCH may carry sidelink control information (SCI), which may indicate various control information used for sidelink communications, such as one or more resources (e.g., time and/or frequency resources) where a transport block (TB) that includes data is carried on the PSSCH. The TB may include V2X data, such as a basic safety message (BSM), a traffic information message (TIM), a signal phase and time (SPAT) message, a MAP message to convey geographic road information, a cooperative awareness message (CAM), a distributed environment notification message (DENM), an in-vehicle information (IVI) message, and/or the like.

In some aspects, the sidelink channel may use resource pools. For example, a scheduling assignment (e.g., included in SCI) may be transmitted in sub-channels using specific resource blocks (RBs) across time. In some aspects, data transmissions (e.g., on the PSSCH) associated with a scheduling assignment may occupy adjacent RBs in the same subframe as the scheduling assignment (e.g., using frequency division multiplexing). In some aspects, a scheduling assignment and associated data transmissions are not transmitted on adjacent RBs.

In some aspects, a UE may operate using transmission mode 4, where resource selection and/or scheduling is performed by the UE (e.g., rather than a base station). In some aspects, the UE may perform resource selection and/or scheduling by sensing channel availability for transmissions. For example, the UE may measure a received signal strength indicator (RSSI) parameter (e.g., a sidelink-RSSI (S-RSSI) parameter) associated with various sidelink channels, may measure a reference signal received power (RSRP) parameter (e.g., a PSSCH-RSRP parameter) associated with various sidelink channels, may measure a reference signal received quality (RSRQ) parameter (e.g., a PSSCH-RSRQ parameter) associated with various sidelink channels, and/or the like, and may select a channel for transmission of V2X communications based at least in part on the measurement(s).

Additionally, or alternatively, the UE may perform resource selection and/or scheduling using SCI received in the PSCCH, which may indicate occupied resources, channel parameters, and/or the like. Additionally, or alternatively, the UE may perform resource selection and/or scheduling by determining a channel busy rate (CBR) associated with various sidelink channels, which may be used for rate control (e.g., by indicating a maximum number of resource blocks that the UE can use for a particular set of subframes).

In transmission mode 4, a UE may generate sidelink grants, and may transmit the grants in SCI. A sidelink grant may indicate, for example, one or more parameters (e.g., transmission parameters) to be used for an upcoming V2X transmission, such as one or more resource blocks to be used for the upcoming V2X transmission on the PSSCH (e.g., for TBs), one or more subframes to be used for the upcoming V2X transmission, a modulation and coding scheme (MCS) to be used for the upcoming V2X transmission, and/or the like. In some aspects, a UE may generate a sidelink grant that indicates one or more parameters for semi-persistent scheduling (SPS), such as a periodicity of a V2X transmission (e.g., a periodic V2X message, such as a safety message and/or the like). Additionally, or alternatively, the UE may generate a sidelink grant for event-driven scheduling, such as for an on-demand V2X message.

In V2X communication systems, conditions of the sidelink channel used to carry V2X communications can vary widely and change quickly due to the high mobility of vehicles and UEs associated with the vehicles, large variations in vehicle traffic at different times of day and in different locations, a wide variety of topographies that the vehicles may traverse (e.g., dense urban environments, hilly environments, flat environments, etc.), and/or the like. Furthermore, V2X communication systems need to be highly reliable due to mission critical safety issues associated with, for example, autonomous vehicles. Some techniques and apparatuses described herein improve performance of V2X communication systems by dynamically determining parameters for V2X transmissions based at least in part on dynamic factors associated with one or more vehicles, the sidelink channel, and/or the like.

In some implementations, a UE may be able to perform autonomous resource selection for V2X transmissions, in accordance with various aspects of the present disclosure.

For example, a UE may determine a limit on a number of resource blocks (RBs) permitted to be used for a V2X transmission by the UE. In some aspects, the UE may determine the limit based at least in part on a congestion level of one or more sidelink channels, which may be determined based at least in part on measuring one or more sidelink channels (e.g., for S-RSSI, PSSCH-RSRP, and/or the like), receiving SCI associated with the one or more sidelink channels, and/or the like. For example, the UE may determine a channel busy rate (CBR) for a sidelink channel in association with a time n at which resource selection is triggered for the UE (e.g., CBR(n-100, n-1), where n-100 denotes a start of a time period and n-1 denotes the end of the time period), and may determine a maximum number of RBs allowed for use by the UE at time n based at least in part on the CBR. Additionally, or alternatively, the UE may determine the limit on the number of RBs by determining a maximum number of RBs allowed for use by the UE in association with time n (e.g., CRlimit(n)) and subtracting a number of RBs already used or scheduled by the UE in association with time n (e.g., CR(n-a, n+b), where n-a denotes a start of the time period and n+b denotes an end of the time period).

The UE may determine one or more parameters for the V2X transmission based at least in part on the limit on the number of RBs. In some aspects, the one or more parameters may be referred to as one or more transmission parameters and/or one or more V2X transmission parameters. As shown, the one or more parameters may include a modulation and coding scheme (MCS) for the V2X transmission, a number of transport blocks (TBs) for the V2X transmission, a number of RBs per TB for the V2X transmission, a retransmission configuration for the V2X transmission, and/or the like. In some aspects, the UE may determine the one or more parameters such that the number of RBs for the V2X transmission does not exceed the limit on the number of RBs.

As an example, if the UE selects an MCS with a lower index value (e.g., permitting fewer bits per symbol) for a V2X transmission, then that V2X transmission would require more TBs and corresponding RBs than if the same V2X transmission were to use an MCS with a higher index value (e.g., permitting more bits per symbol). However, using an MCS with a lower index value for the V2X transmission may increase the range of the V2X transmission and/or may increase reliability of the V2X transmission as compared to using an MCS with a higher index value. Thus, in some aspects, if the limit on the number of RBs is relatively high (e.g., greater than or equal to a threshold), then the UE may select an MCS with a lower index value, and if the limit on the number of RBs is relatively low (e.g., less than or equal to a threshold), then the UE may select an MCS with a higher index value. In some aspects, the UE may select from multiple different MCS index values, and different MCS index values may be associated with different thresholds for the limit on the number of RBs.

As another example, if the UE configures a retransmission configuration to enable retransmissions for a V2X transmission, then that V2X transmission would require more TBs and corresponding RBs than if the UE were to configure the retransmission configuration to disable retransmissions for the same V2X transmission. However, enabling retransmissions for the V2X transmission may increase the range of the V2X transmission and/or may increase reliability of the V2X transmission as compared to disabling retransmissions for the V2X transmission. Thus, in some aspects, if the limit on the number of RBs is relatively high (e.g., greater than or equal to a threshold), then the UE may enable retransmissions, and if the limit on the number of RBs is relatively low (e.g., less than or equal to a threshold), then the UE may disable retransmissions. In some aspects, the UE may select from multiple different quantities of retransmissions (e.g., one retransmission, two retransmissions, etc.), and different quantities of retransmissions may be associated with different thresholds for the limit on the number of RBs.

In some aspects, the UE may select the one or more parameters to increase or maximize a range for the V2X transmission (e.g., a distance that can be covered by the V2X transmission and corresponding retransmissions) subject to the limit on the number of RBs, as described in more detail below in connection with FIG.

5. In this way, the UE may improve reliability, may increase safety, may increase the likelihood of successful reception of the V2X transmission, etc., while operating according to the limit on the number of RBs permitted for the V2X transmission.

In a V2X communication system, sidelink channel conditions can vary widely at different times, at different geographic locations, on different frequencies, and/or the like. Thus, the UE may dynamically determine the one or more parameters for the V2X transmission based at least in part on conditions that exist at the time that the V2X transmission is scheduled. In some aspects, the UE may determine the one or more transmission parameters based at least in part on a dynamic factor associated with the UE and/or a vehicle associated with the UE (e.g., a network traffic demand associated with one or more applications of the UE, congestion, and/or the like). Additionally, or alternatively, the UE may determine the one or more transmission parameters based at least in part on a dynamic factor associated with a wireless network via which the V2X transmission is to be transmitted (e.g., a congestion level associated with the wireless network, a carrier frequency on which the V2X transmission is to be transmitted, a priority of the V2X transmission on the wireless network, and/or the like). In this way, the UE may improve or optimize transmission of V2X messages under changing conditions.

Additionally, or alternatively, the UE may determine the one or more V2X transmission parameters based at least in part on the selected frequency or frequencies. For example, different frequencies may be associated with different CBR values, and thus may be associated with different limits on the number of RBs permitted for use by the UE. Additionally, or alternatively, different combinations of transmission parameters may result in different performance at different frequencies, and the UE may use this as a factor when determining the one or more transmission parameters.

In some aspects, the UE may determine the one or more transmission parameters based at least in part on a network traffic demand associated with one or more applications of the UE. For example, if the first UE has a relatively high network traffic demand (e.g., the number of requested V2X transmissions is greater than or equal to a threshold), then the UE may use a smaller number of RBs per V2X transmission. Conversely, if the UE has a relatively low network traffic demand (e.g., the number of requested V2X transmissions is less than or equal to a threshold), then the UE may use a larger number of RBs per V2X transmission. The UE may configure a smaller number of RBs per V2X transmission by using a higher MCS index, by disabling retransmissions or configuring a smaller number of retransmissions, by using a smaller number of TBs, and/or by using a smaller number of RBs per TB. Conversely, the UE may configure a larger number of RBs per V2X transmission by using a lower MCS index, by enabling retransmissions or configuring a larger number of retransmissions, by using a larger number of TBs, and/or by using a larger number of RBs per TB.

Additionally, or alternatively, the UE may determine the one or more transmission parameters based at least in part on a congestion level associated with a wireless network via which the V2X transmission is to be transmitted (e.g., a congestion level of the sidelink channel and/or one or more frequencies via which the V2X transmission is to be transmitted). For example, if the wireless network has a relatively high congestion level, then the UE may use a smaller number of RBs per V2X transmission. Conversely, if the wireless network has a relatively low congestion level, then the UE may use a larger number of RBs per V2X transmission. In some aspects, the UE may determine the congestion level based at least in part on a CBR, a resource restriction (e.g., a rate control parameter, a power control parameter, a congestion control parameter, etc.), a measured parameter of the wireless network (e.g., an energy level), and/or the like.

The UE may transmit the V2X transmission (e.g., to a second UE and/or one or more other UEs) based at least in part on the one or more parameters. For example, the UE may modulate and/or encode the V2X transmission using a selected MCS, may transmit the V2X transmission using a selected number of TBs, may transmit the V2X transmission using a selected number of RBs per TB, may retransmit or prevent retransmission of the V2X transmission according to a selected retransmission configuration, may transmit the V2X transmission on a selected carrier frequency, and/or the like. By accounting for dynamic factors when determining the above transmission parameter(s), the UE may improve performance (e.g., a transmission range) of the V2X transmission subject to constraints on the V2X transmission. For example, in some cases, the UE may transmit a V2X transmission using an MCS with a high index, rather than dropping the V2X transmission.

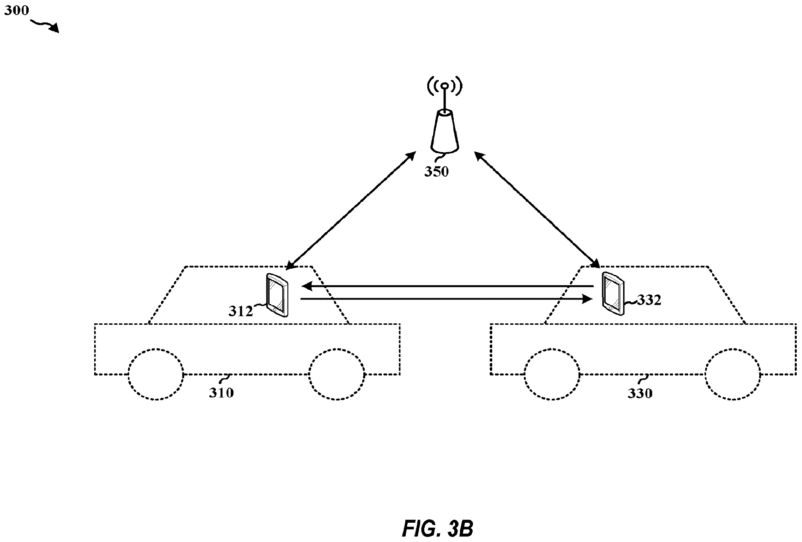

FIG. 3B is an example diagram 300 illustrating device-to-device communication. A first device 312 (e.g., UE 312) is present in a first vehicle 310, and thus may travel with the first vehicle 310. A second device 332 (e.g., another UE 332) may be present in a second vehicle 330. In another aspect, the first device 312 may be present independently from the first vehicle 310 or may be a part of the first vehicle 310. The second device 332 may be present independently from the second vehicle 330, or may be a part of the second vehicle 330. The first device 312 and the second device 332 may be connected to a network entity, such as in a connected mode with a base station 350. The first device 312 and the second device 332 may also be configured to perform D2D communication with each other over NR. The first device 312 and the second device 332 may also perform short range communication with each other over IEEE 802.11p.

The vehicles may include an autonomous vehicle, a semi-autonomous vehicle, a non-autonomous vehicle, and/or the like. Although both UEs in FIG. 3B are shown as being associated with a vehicle, in some aspects, one or more of the UEs may not be associated with a vehicle. For example, a UE may be associated with infrastructure (e.g., traffic infrastructure), such as a traffic signal, a lane signal, a sensor, a traffic controller system, and/or the like.

NR V2V communication may provide more reliable performance than LTE V2V by providing for a more history based calculation of congestion and/or a more limited reliance on future periodic transmissions. Although the following discussion refers to NR V2V communication by way of illustration and not limitation, the NR V2V communication is similar to NR D2D communication, and thus following discussion may also apply to NR and LTE D2D communication.

Congestion may occur in NR V2V communication, e.g., due to increased network traffic. Congestion control may be implemented to control network congestion via certain parameters related to communication over NR V2V based on a level of the congestion. For example, in certain instances, there may be no centralized entity to perform congestion control of the spectrum. The congestion control may be performed without a centralized entity (e.g. eNB) to manage admission control and/or radio resource utilization (e.g. out-of-network coverage operation, and/or with decentralized resource selection/reselection procedures). Without a centralized entity managing network resources and device communications, collisions of different communications may occur. Too many collisions may adversely affect the performance of the communication system. For example, collisions may occur when resources are not properly allocated to different device communications which may result in some devices not having sufficient resources for communication. Depending on the communication system and/or the channel access method of the communication system, a device may not be able to handle network congestion. For example, a number of communications that can be successfully performed reliably in a network may vary depending on a type of a communication system. Decentralized congestion control may be based on an 802.11p physical layer and may be generalized to provide coexistence of various technologies. Therefore, technology-neutral decentralized congestion control in a system with no centralized entity for managing congestion may be desirable. In some aspects, technology specific enhancements for decentralized congestion control may be provided.

In an aspect, congestion control may be based on a channel busy ratio (CBR) and/or a channel utilization. The CBR may represent a percentage of busy resources. The channel utilization may represent a percentage of a channel being utilized for communication. The CBR and the channel utilization may be technology-neutral, as described below. Decentralized congestion control for the 802.11p technology may be derived based on the technology-neutral congestion control while the technology-neutral approach for decentralized congestion control may be used for NR V2V.

Each UE may estimate a channel utilization based on a CBR. The CBR may be an estimate of the percentage of the resources that are deemed busy/utilized. In an aspect, a resource may be deemed busy and/or utilized if a signal is decoded on such a resource or if the energy in such a resource is greater than an energy threshold.

The original V2X communication uses WLAN technology and works directly between vehicles and vehicles (V2V) and traffic infrastructure (V2I), which form a vehicular ad-hoc network as two V2X senders come within each other's range. Hence, it does not require any communication infrastructure for vehicles to communicate, which helps to assure safety in remote or little-developed areas. WLAN is particularly well-suited for V2X communication, due to its low latency. V2X communications includes messages known as a Cooperative Awareness Messages (CAM) or Basic Safety Message (BSM), and a Decentralised Environmental Notification Messages (DENM). Other roadside infrastructure related messages are a Signal Phase and Timing Message (SPAT), an Vehicle Information Message (IVI), and a Service Request Message (SRM). The data volume of these messages is very low. The radio technology is part of the WLAN IEEE 802.11 family of standards and known in the US as Wireless Access in Vehicular Environments (WAVE) and in Europe as ITS-G5.https://en.wikipedia.org/wiki/Vehicle-to-everything - cite_note-8 To complement the direct communication mode, vehicles can be equipped with traditional cellular communication technologies, supporting V2N based services. This extension with V2N was achieved in Europe under the C-ITS platform umbrella with cellular systems and broadcast systems (TMC/DAB+).

Path History (also referred to as Path History information) is included in BSM (e.g., a BSM report) to indicate vehicle position information. Path History information indicates the vehicle's last position information or information on a series of past positions. Path History information is conventionally used for road geometry estimations and target classification. In current implementations, Path History information indicates the vehicle's last 5 or 15 positions and is included in every BSM.

Additional information is also included in BSMs from time to time. For example, certificates (also known as Full certificates) are typically appended to BSMs at defined intervals, such as every 450 ms. Additionally, limited certificate information referred to as a digest of the certificate is appended to other BSMs sent at shorter intervals, such as 100 ms intervals and assuming no congestion control. A receiving device may be able to utilize the digest to locate the full certificate (referred to herein as certificate information) corresponding to a digest (referred to herein as digest information or partial certificate information). The digest may be 8 Bytes in some implementations, and may include a summary of the material information of the certificate information and/or indicate or identify the certificate information. In a particular implementation the digest includes or indicates message source authentication information, integrity check information, or both.

The current implementations of including Path History (PH) and full certificates in this many BSMs is inefficient and bandwidth hungry. This is especially true as BSMs make up the majority of the bandwidth use in such scenarios. For example, BSMs constitute the bulk of the load on the now scarcer than ever ITS band.

The current implementations of including information indicating the past 5 or 15 positions in each BSM takes up approximately 43 or 123 Bytes. A full certification is approximately 100 Bytes (e.g., 125 Bytes) and is included at frequency of 2 Hz (every 0.5 seconds). Hence the overhead caused by path history information and certificate information inclusion could take up approximately 47-58% of BSM message size.

In the aspects described herein, a wireless communication device selectively includes particular pieces of information in a safety message in response to corresponding trigger conditions. For example, a host vehicle (HV) will include a PH information in a BSM or CAM/DENM based on one or more conditions being satisfied. The conditions may include new vehicle detection, collision zone identification, channel parameters, timing, etc. As another example, a host vehicle will include a certificate information in a BSM or CAM/DENM based on one or more conditions being satisfied. The conditions may include new vehicle detection, collision zone identification, channel parameters, timing, critical events, etc.

As an illustrative, non-limiting example, a HV selectively includes PH information in its BSM only when it detects an actual new vehicle in its collision zone vicinity. Other vehicles already in the HV's broadcast range can use past received BSMs to construct the HV's path history trajectory. The HV can also include PH points during adverse channel conditions, where there's uncertainty around the reception of HV's past BSMs by another device (e.g., a Remote Vehicle (RV)). The HV may take a similar approach for the inclusion of full certificate information and may use the same or different parameters.

The aspects described herein enable reduced over the air (OTA) congestion by including PH information and full certificate information based on conditions which actually could lead to adverse events or when the additional information is needed. The aspects reduce congestion by reducing the inclusion of information in the safety messages and may be utilized with C-SAE (e.g., SAE standard J3161/1 and J2945/1)and/or ETSI CAM.

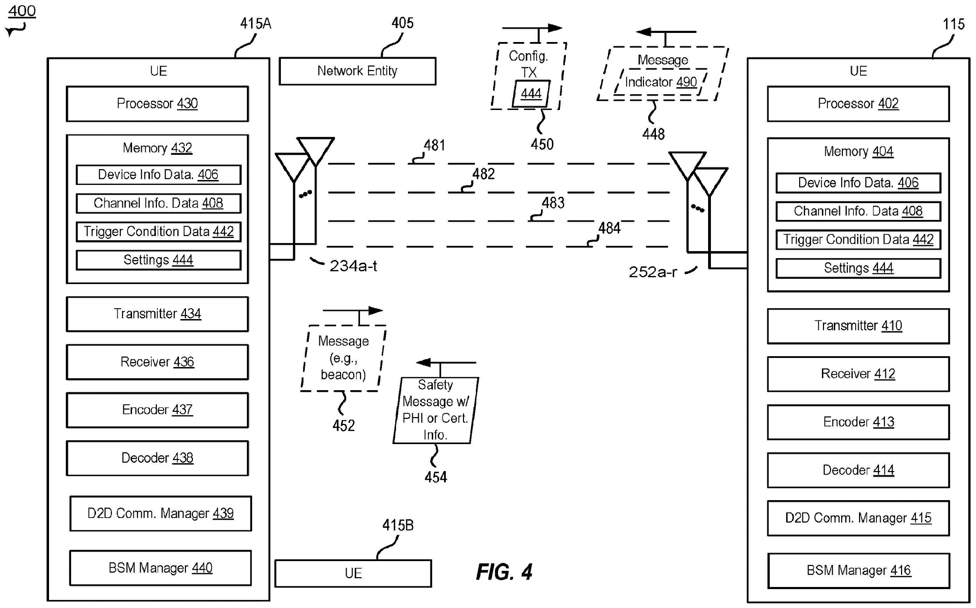

FIG. 4 illustrates an example of a wireless communications system 400 that supports enhanced safety message reporting operations in accordance with aspects of the present disclosure. In some examples, wireless communications system 400 may implement aspects of wireless communication system 100. For example, wireless communications system 400 may include UEs 115, 115A, and 115B. Enhanced safety message (e.g., BSM) reporting operations may reduce signaling overhead and latency and increase throughput. Thus, network and device performance can be increased.

UEs 115, 115A, and 115B may be configured to communicate via one or more portions of the electromagnetic spectrum. The electromagnetic spectrum is often subdivided, based on frequency/wavelength, into various classes, bands, channels, etc. In 5G NR two initial operating bands have been identified as frequency range designations FR1 (410 MHz - 7.125 GHz) and FR2 (24.25 GHz - 52.6 GHz). The frequencies between FR1 and FR2 are often referred to as mid-band frequencies. Although a portion of FR1 is greater than 6 GHz, FR1 is often referred to (interchangeably) as a "sub-6 GHz" band in various documents and articles. A similar nomenclature issue sometimes occurs with regard to FR2, which is often referred to (interchangeably) as a "mmWave" band in documents and articles, despite being different from the extremely high frequency (EHF) band (30 GHz - 300 GHz) which is identified by the International Telecommunications Union (ITU) as a "mmWave" band.

With the above aspects in mind, unless specifically stated otherwise, it should be understood that the term "sub-6 GHz" or the like if used herein may broadly represent frequencies that may be less than 6 GHz, may be within FR1, or may include mid-band frequencies. Further, unless specifically stated otherwise, it should be understood that the term "mmWave" or the like if used herein may broadly represent frequencies that may include mid-band frequencies, may be within FR2, or may be within the EHF band.

It is noted that SCS may be equal to 15, 30, 60, or 120 kHz for some data channels. UEs 115, 115A, and 115B may be configured to communicate via one or more component carriers (CCs), such as representative first CC 481, second CC 482, third CC 483, and fourth CC 484. Although four CCs are shown, this is for illustration only, more or fewer than four CCs may be used. One or more CCs may be used to communicate control channel transmissions, data channel transmissions, and/or sidelink channel transmissions.

Such transmissions may include a Physical Downlink Control Channel (PDCCH), a Physical Downlink Shared Channel (PDSCH), a Physical Uplink Control Channel (PUCCH), a Physical Uplink Shared Channel (PUSCH), a Physical Sidelink Control Channel (PSCCH), a Physical Sidelink Shared Channel (PSSCH), or a Physical Sidelink Feedback Channel (PSFCH). Such transmissions may be scheduled by aperiodic grants and/or periodic grants.

Each periodic grant may have a corresponding configuration, such as configuration parameters/settings. The periodic grant configuration may include configured grant (CG) configurations and settings. Additionally, or alternatively, one or more periodic grants (e.g.,

CGs thereof) may have or be assigned to a CC ID, such as intended CC ID.

Each CC may have a corresponding configuration, such as configuration parameters/settings. The configuration may include bandwidth, bandwidth part, HARQ process, TCI state, RS, control channel resources, data channel resources, or a combination thereof. Additionally, or alternatively, one or more CCs may have or be assigned to a Cell ID, a Bandwidth Part (BWP) ID, or both. The Cell ID may include a unique cell ID for the CC, a virtual Cell ID, or a particular Cell ID of a particular CC of the plurality of CCs. Additionally, or alternatively, one or more CCs may have or be assigned to a HARQ ID. Each CC may also have corresponding management functionalities, such as, beam management, BWP switching functionality, or both. In some implementations, two or more CCs are quasi co-located, such that the CCs have the same beam and/or same symbol.

In some implementations, control information may be communicated via UEs 115, 115A, and 115B. For example, the control information may be communicated suing MAC-CE transmissions, RRC transmissions, DCI (downlink control information) transmissions, UCI (uplink control information) transmissions, SCI (sidelink control information) transmissions, another transmission, or a combination thereof.

UE 115 can include a variety of components (e.g., structural, hardware components) used for carrying out one or more functions described herein. For example, these components can includes processor 402, memory 404, transmitter 410, receiver 412, encoder, 413, decoder 414, device-to-device (D2D) communication manager 415, BSM manager 416, and antennas 252a-r. Processor 402 may be configured to execute instructions stored at memory 404 to perform the operations described herein. In some implementations, processor 402 includes or corresponds to controller/processor 280, and memory 404 includes or corresponds to memory 282. Memory 404 may also be configured to store device information data 406, channel condition data 408, trigger condition data 442, settings data 444, or a combination thereof, as further described herein.

The device information data 406 includes or corresponds to data associated with or corresponding to the UE 115 and other devices involved in device-to-device communication operations. For example, the device information data 406 may include UE related information such as path history information, certificate information, digest information, temporary ID information, etc. The device information data 406 may further include other device (e.g., other UE related information, such as UE 115A and 115B) such as path history information of other devices, certificate information of other devices, digest information, temporary ID information of other devices, temporary ID information history, etc. The information for other devices may be associated with each other or otherwise correlated with other pieces of information to create a local dynamic map (LDM). The LDM may include information about devices which is persistent (non-temporary identifiers) or enable the identification of devices on a persistent or non-temporary basis.

The channel condition data 408 includes or corresponds to data associated with or corresponding to channel quality or congestion conditions for device-to-device communication operations. For example, the channel condition data 408 may include channel quality measurements or determinations. The channel conditions data 408 may include or correspond to received power thresholds or ranges or received quality thresholds or ranges. For example, the channel conditions data 408 may utilize a channel quality indicator (CQI), RSRP, RSRQ, Signal-to-interference-plus-noise ratio (SINR), etc. The channel condition data 408 may further include operations for determining or adjusting a quality condition. For example, the channel condition data 408 includes operations for determining a quality condition based on one or more parameters, such as channel congestion. To illustrate, the UE 115 may utilize a packer error rate (PER) for determining congestion.

The trigger condition data 442 includes or corresponds to data indicating or corresponding to trigger conditions for the inclusion of information in a BSM. For example, the trigger condition data 442 may include data indicating a particular trigger condition parameter value or range of values in which path history information is included in the BSM, in which certificate information is included in the BSM, or in which both are included in the BSM. Additionally, or alternatively, the trigger condition data 442 may include data indicating a particular trigger condition parameter value or range of values in which path history information is not included in the BSM, in which certificate information is not included in the BSM, or in which neither are included in the BSM. As illustrative examples of types of trigger conditions, the trigger conditions may include timing conditions, new device determination conditions, collision zone detection conditions, channel quality conditions (e.g., CQI), congestion related conditions (e.g., PER), or a combination thereof. The conditions may be used serially or in parallel with one another. For example, multiple conditions may have to be satisfied to include path history information in a BSM and the UE 115 may determine if either of A or B is satisfied before determining if C or D is satisfied only when either at least one of A or B is satisfied. As another example, additional or different conditions, from the conditions used for path history information, may be used to include certificate information in the safety message.

The settings data 444 includes or corresponds to data associated with enhanced BSM feedback and reporting operations for sidelink communications. The settings data 444 may include one or more types of BSM feedback operation modes and/or thresholds or conditions for switching between BSM feedback modes and/or configurations. For example, the settings data 444 may have data indicating different thresholds for different BSM feedback modes, such as reduced PH reporting modes, reduced certificate reporting modes or collision zone only reporting modes, etc.

Transmitter 410 is configured to transmit data to one or more other devices, and receiver 412 is configured to receive data from one or more other devices. For example, transmitter 410 may transmit data, and receiver 412 may receive data, via a network, such as a wired network, a wireless network, or a combination thereof. For example, UE 115 may be configured to transmit and/or receive data via a direct device-to-device connection, a local area network (LAN), a wide area network (WAN), a modem-to-modem connection, the Internet, intranet, extranet, cable transmission system, cellular communication network, any combination of the above, or any other communications network now known or later developed within which permits two or more electronic devices to communicate. In some implementations, transmitter 410 and receiver 412 may be replaced with a transceiver. Additionally, or alternatively, transmitter 410, receiver, 412, or both may include or correspond to one or more components of UE 115 described with reference to FIG. 2.

Encoder 413 and decoder 414 may be configured to encode and decode data for transmission. D2D communication manager 415 may be configured to determine and perform D2D communication operations, such as for V2X operations over Wi-Fi or cellular. For example, D2D communication manager 415 is configured to determine D2D communication timing, message generation, etc. As another example, D2D communication manager 415 is configured to determine whether to perform enhanced BSM reporting or feedback operations. In some implementations, the D2D communication manager 415 is configured to determine what particular BSM reporting or feedback mode to operate in.

BSM manager 416 may be configured to determine and perform BSM operations. For example, BSM manager 416 is configured to determine what resource or resources to use for BSM feedback, such as when and where to perform BSM transmission. As another example, BSM manager 416 is configured to determine whether to include path history information or certificate information in a particular BSM. In implementations in which it is determined that additional information is to be included in the BSM, the BSM manager 416 may be configured to determine what type of information to include and for how long.

UEs 115A and 115B include processor 430, memory 432, transmitter 434, receiver 436, encoder 437, decoder 438, D2D communication manager 439, BSM manager 440, and antennas 234a-t. Processor 430 may be configured to execute instructions stores at memory 432 to perform the operations described herein. In some implementations, processor 430 includes or corresponds to controller/processor 240, and memory 432 includes or corresponds to memory 242. Memory 432 may be configured to store device information data 406, channel condition data 408, trigger condition data 442, settings data 444, or a combination thereof, similar to the UE 115 and as further described herein.

Transmitter 434 is configured to transmit data to one or more other devices, and receiver 436 is configured to receive data from one or more other devices. For example, transmitter 434 may transmit data, and receiver 436 may receive data, via a network, such as a wired network, a wireless network, or a combination thereof. For example, UEs 115A and 115B may be configured to transmit and/or receive data via a direct device-to-device connection, a local area network (LAN), a wide area network (WAN), a modem-to-modem connection, the Internet, intranet, extranet, cable transmission system, cellular communication network, any combination of the above, or any other communications network now known or later developed within which permits two or more electronic devices to communicate. In some implementations, transmitter 434 and receiver 436 may be replaced with a transceiver. Additionally, or alternatively, transmitter 434, receiver, 436, or both may include or correspond to one or more components of UE 115 described with reference to FIG. 2.

Encoder 437, and decoder 438 may include the same functionality as described with reference to encoder 413 and decoder 414, respectively. D2D communication manager 439 may include similar functionality as described with reference to D2D communication manager 415. BSM manager 440 may include similar functionality as described with reference to BSM manager 416.

During operation of wireless communications system 400, UE 115A may determine that UE 115 has enhanced HARQ feedback operation capability. For example, UE 115 may transmit a message 448 that includes an enhanced resource reservation indicator 490 (e.g., a HARQ feedback for sidelink channel indicator). Indicator 490 may indicate enhanced HARQ feedback operation capability for unlicensed spectrum and/or sidelink channel operations or a particular type or mode of HARQ feedback operation. In some implementations, a network entity (e.g., a network entity 405) or UE 115A/B sends control information to indicate to UE 115 that enhanced HARQ feedback operation and/or a particular type of enhanced HARQ feedback operation is to be used. For example, in some implementations, message 448 (or another message, such as configuration transmission 450) is transmitted by the UE 115A/B or the network entity 405. The configuration transmission 450 may include or indicate to use enhanced HARQ feedback operations or to adjust or implement a setting of a particular type of enhanced HARQ feedback operation. For example, the configuration transmission 450 may include trigger conditions data 442, as indicated in the example of FIG. 4, settings data 444, or both.

During operation, devices of wireless communications system 400, perform enhanced safety message (e.g., BSM) reporting operations. For example, the UEs 115, 115A, 115B exchange transmissions via D2D communications, such as via a sidelink channel. In the example of FIG. 4, the UE 115A transmits a message 452. The message 452 may include or correspond to a beacon type message or a broadcast message. In some implementations, the message 452 comprises a BSM.

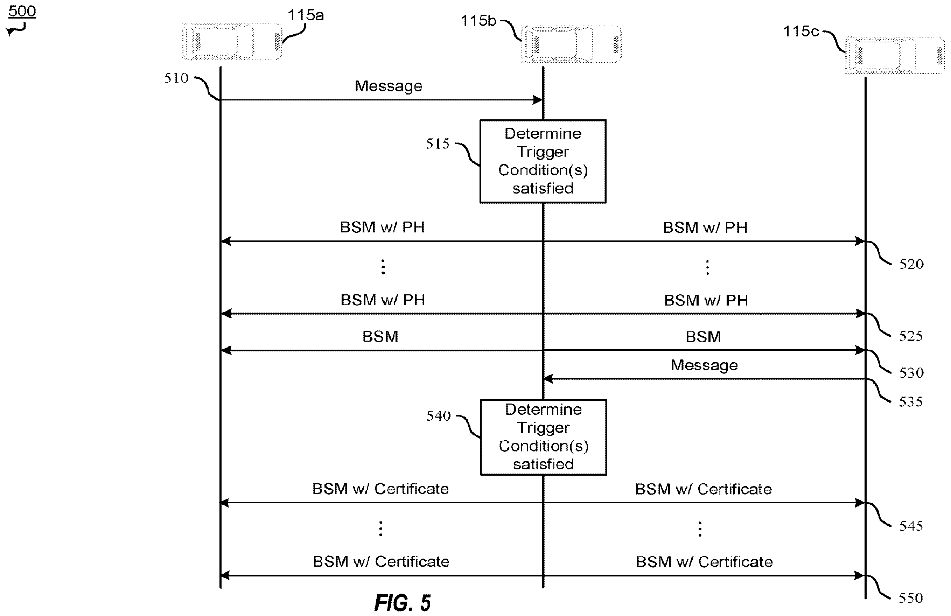

The UE 115 may receive the message 452 and may perform one or more evaluations or determinations on the message 452 or using the message 452. The UE 115 may determine a position of the UE 115A based on the message 452, and may use the position to determine if the UE 115A is or will be in a collision detection zone of the UE 115. Additionally, or alternatively, the UE 115 may determine an identifier of the first UE 115A. For example, the UE 115 may extract or parse a temporary identifier from the message 452 and use the temporary identifier to determine if the UE 115A is "new" to the UE 115, such as not in a map of devices kept by the UE 115. In a particular implementation, the UE 115 may further reference or generate a LDM based on the message and use the LDM to determine if the first UE 115A is new. To illustrate, the UE 115 may correlate information in the message 452 with information previously received to determine if the UE 115a, such as temporary ID thereof, maps or corresponds to a previous temporary or non-transient identifier of the LDM. Based on the determinations and a trigger condition being identified, such as a new device or a device in a collision zone of the UE 115, the UE 115 may determine to include information in an upcoming BSM. Examples of trigger conditions are further described with reference to FIG. 5.

As illustrated in the example of FIG. 4, the UE 115 determines to include path history information, a full certificate, or both in a next safety message (e.g., BSM). The UE 115 generates and transmits the safety message including the path history information and/or the full certificate. For example, the UE 115 broadcasts the safety message 454 (e.g., BSM). One of more other UEs, such as UE 115A and UE 115B, may receive the safety message 454 and extract the path history information and the full certificate. The path history information and/or the full certificate may enable the receiving UEs to identify new devices and/or avoid and reduce collisions or near collisions. As the UEs selectively include the path history information and/or a certificate information, the signaling overhead of the network can be reduced.

Accordingly, the UEs 115, 115A and 115B may be able to more efficiently perform safety message operations (e.g., BSM operations). Thus, FIG. 4 describes enhanced safety message reporting operations. Using enhanced safety message reporting operations may enable improvements when operating in D2D communications. Performing enhanced safety message reporting operations enables reduced bandwidth / spectrum waste when sending and receiving safety messages and thus, enhanced UE and network performance by increasing throughput and reducing latency. The efficiencies are achieved without reducing safety or efficacy of the safety message transmissions, as safety message transmissions are still sent under certain conditions which are more likely to lead collisions.

FIG. 5 illustrates a diagram of an example wireless communication system that supports enhanced safety message reporting operations according to one or more aspects. The example of FIG. 5 includes similar devices to the devices described in FIGS. 1, 2, and 4, such as UEs 115, 115A, and 115B. The devices, such as UEs 115a-115c, of FIG. 5 may include one or more of the components as described in FIGS. 2 and 4. In FIG. 5, these devices may utilize antennas 252a-r, transmitter 410, receiver 412, encoder 413 and/or decoder 414, or may utilize antennas 234a-t, transmitter 434, receiver 436, encoder 437 and/or decoder 438 to communicate transmissions and receptions.

Referring to FIG. 5, FIG. 5 is a diagram 500 of dynamic information inclusion in BSM operations. Although the example illustrated in FIG. 5 depicts multiple vehicle UEs or HVs, in other implementations, the operations may occur between other wireless communication devices, such as non-vehicle UEs, base stations, etc.

At 510, the first UE 115a transmits a message. For example, the first UE 115a is connected to the second UE 115b and transmits a unicast message to the second UE 115b. As another example, the first UE 115a transmits a broadcast message, and at least the second UE 115b receives the broadcast message. The message may be transmitted via a sidelink communication channel or a D2D communication channel. In some implementations, the message may include or correspond to a BSM or a beacon transmission.

In a particular implementation, the message is a BSM. In some such implementations, the BSM includes PH or certificate information. In some other implementations, the BSM does not include PH or certificate information. In some such implementations, the first UE 115a may determine not to include PH or certificate information in the BSM based on determining that no trigger condition is satisfied.

The second UE 115b may receive and decode the message. The second UE 115b may update or add device related information for the first UE 115a to its stored information. For example, the second UE 115b may determine a position of the first UE 115a based on the message or may update its records (e.g., a LDM) based on the message. After receiving the message, the second UE 115b may determine to send a BSM. For example, the second UE 115b may determine to send a BSM based on timing, such as in response to normal operating procedures for sending a BSM every X duration. As another example, the second UE 115b may determine to send a BSM in response to a specific trigger, such as determining a new device is present (e.g., new temporary ID) or that a device is in close proximity to the second UE 115b.

At 515, the second UE 115b determines whether to include information in an outgoing BSM based on evaluating one or more trigger conditions. For example, the BSM manager 416 or 440 of the second UE 115b determines whether one or more trigger conditions for the inclusion of PH information are satisfied in connection with determining to send the BSM. In some implementations, the second UE 115b determines how much PH information to include, such as a particular number of past positions. Additionally, or alternatively, the second UE 115b determines for how long to transmit the PH information. In such implementations, the second UE 115b may determine either based on how many trigger conditions were satisfied, which trigger conditions were satisfied, or a combination thereof. For example, if a new device condition is satisfied the second UE 115b may determine to send more or 15 past positions for a shorter period of time as compared to when a collision zone detection condition is satisfied and the second UE 115b may send 5 past positions for a longer period of time (e.g., until the collision is resolved/averted).

At 520, the second UE 115b transmits a BSM with PH information. For example, the BSM manager 416 or 440 of the second UE 115b generates and broadcasts a BSM to other devices, such as the first and third UEs 115a and 115c, which includes path history information.

From 520 to 525, the second UE 115b transmits additional BSMs with PH information. For example, the BSM manager 416 or 440 of the second UE 115b generates and broadcasts one or more second BSMs to other devices which includes path history information. The PH information of the one or more second BSMs may be the same as or different from the PH information of the BSM. For example, the PH information of the one or more second BSMs may include less numbers of PH.

At 530, the second UE 115b transmits a BSM. For example, the BSM manager 416 or 440 of the second UE 115b generates and broadcasts a third BSM to other devices which does not include path history information. The second UE 115b may determine to not include path history information based on satisfying the duration or number of BSMs with path history information from the determination at 515. In some such implementations, the second UE 115b may additionally determine not to include PH or certificate information in the BSM based on determining that no trigger condition is satisfied at 530.

At 535, the third UE 115c transmits a message (e.g., second message). For example, the third UE 115c is connected to the second UE 115b and transmits a unicast message to the second UE 115b. As another example, the third UE 115c transmits a broadcast message, and at least the second UE 115b receives the broadcast message. The message may be transmitted via a sidelink communication channel or a D2D communication channel. In some implementations, the message may include or correspond to a BSM or a beacon transmission.

In a particular implementation, the message is a BSM. In some such implementations, the BSM includes PH or certificate information. In some other implementations, the BSM does not include PH or certificate information. In some such implementations, the third UE 115c may determine not to include PH or certificate information in the BSM based on determining that no trigger condition is satisfied.

The second UE 115b may receive and decode the message. The second UE 115b may update or add device related information for the third UE 115c to its stored information. For example, the second UE 115b may determine a position of the third UE 115c based on the message or may update its records (e.g., a LDM) based on the message. After receiving the message, the second UE 115b may determine to send a BSM. For example, the second UE 115b may determine to send a BSM based on timing, such as in response to normal operating procedures for sending a BSM every X duration. As another example, the second UE 115b may determine to send a BSM in response to a specific trigger, such as determining a new device is present (e.g., new temporary ID) or that a device is in close proximity to the second UE 115b.

At 540, the second UE 115b determines whether to include information in an outgoing BSM based on evaluating one or more trigger conditions. For example, the BSM manager 416 or 440 of the second UE 115b determines whether one or more trigger conditions for the inclusion of certificate information are satisfied in connection with determining to send the BSM. In some implementations, the second UE 115b determines how much certificate information to include, such as a full certificate (full certificate information). Additionally, or alternatively, the second UE 115b determines for how long to transmit the certificate information. In such implementations, the second UE 115b may determine either based on how many trigger conditions were satisfied, which trigger conditions were satisfied, or a combination thereof. For example, if a new device condition is satisfied the second UE 115b may determine to send more or 15 past positions for a shorter period of time as compared to when a collision zone detection condition is satisfied and the second UE 115b may send 5 past positions for a longer period of time (e.g., until the collision is resolved/averted).

At 545, the second UE 115b transmits a BSM with certificate information. For example, the BSM manager 416 or 440 of the second UE 115b generates and broadcasts a fourth BSM to other devices, such as the first and third UEs 115a and 115c, which includes certificate information.

From 545 to 550, the second UE 115b transmits additional BSMs with certificate information. For example, the BSM manager 416 or 440 of the second UE 115b generates and broadcasts one or more fifth BSMs to other devices which includes path history information. The certificate information of the one or more fifth BSMs may be the same as or different from the certificate information of the fourth BSM. For example, the certificate information of the one or more fifth BSMs may include digest information.

In some implementations, a trigger condition for the inclusion of additional device related information into a safety message corresponds to detection of a "new" vehicle in a collision zone of a transmitting device. Because devices use temporary IDs which change periodically, such as every 5 minutes, receipt of a new temporary ID does not necessarily indicate a new vehicle. Accordingly, received temporary IDs should be correlated with other devices' or vehicles' dynamics (past or predicted movement) to rule out the "new" temporary ID does not belong to an existing, known neighbor device or vehicle which the transmitting device does already know about. In some such implementations, the transmitting device utilizes a LDM to determine if a new temporary ID corresponds to a new device or to a temporary ID change.

In some implementations, the collision zone trigger condition is based on distance, time to collision (TTC), or both. As an illustrative, non-limiting example the collision zone trigger condition is based on both a distance condition and a TTC condition. The following illustrates example equations for a distance condition and a TTC condition between two devices or entities A and B : $\Delta x_{AB} \leq X$ and $0 \leq TTC_{AB} \leq Y$. The distance threshold for the collision zone may be static, dynamic, and/or based on speed or operating conditions. Additionally, the TTC condition may be static or dynamic and based on a size of the collision zone. The distance between devices and TTC may be calculated based on the transmitting device's speed and trajectory and the estimated trajectory of the other devices.

In some implementations, once a transmitting device determines to include PH information or certificate information in a BSM, the transmitting device may continue including the PH information or certificate information in subsequent BSMs to increase a likelihood of reception. The transmitting device may determine a number of BSMs to include the additional information in or may determine a period of time to include the additional information in BSMs. As an illustrative, non-limiting example, the transmitting device may use the following formula to determine for how long to include such additional information:

$$ n = \min(CQI \left\lceil \frac{TTC_{AB}}{ITT_A} \right\rceil, \ N) $$

. In the above formula, the

$$ CQI = \frac{1}{N(k)} \sum_{i=1}^{N(k)} PER_i(k) $$

is the channel quality index and $N(k)$ is the number of vehicles within range of a particular vehicle $V_A$. The range may be determined based on the PER, such as by *vPERRange*. The $ITT_A$ is the Inter-Transmit Time between subsequent BSM transmissions of the vehicle ($V_A$), where $ITT_A \in \{100, ...,600\}$ *ms*. $N$ can be arbitrarily chosen, e.g. $N = 50$, which is the average number of BSM transmissions before a resource reselection. The above formula enables a transmitting device to include PH information and/or certificate information until the transmitting vehicle meets with the receiving vehicle. Lower *ITT* allows for more such PH information included transmissions (which is beneficial because it implies lower vehicle density and hence lower channel congestion). Also, higher *CQI* indicates worse channel conditions and leads to higher n.

In some implementations, a trigger condition corresponds to a channel quality condition. In some such implementations, the trigger condition is a high CQI trigger condition and utilizes a CQI threshold value. A high CQI is indicative of a high average packer error rate (PER) in received BSMs from neighboring devices (e.g., neighboring RVs.) at the transmitting device (e.g., HV). Channel reciprocity would indicate that the neighboring devices also suffer from dropped BSMs from the transmitting device, which could hinder the receiving devices' ability to reconstruct the transmitting device's past position and trajectory (leading to inaccurate future trajectory / predicted trajectory). In such cases it is beneficial for the transmitting device to include PH information (or certificate information) in its BSMs even if no new vehicle is detected under such circumstances.

As an illustrative, non-limiting example, the CQI can be determined by the following formula:

$$ CQI_X = \frac{1}{N_X(k)} \sum_{i=1}^{N_X(k)} PER_i(k) $$

where $N_X$ (k) is the number of vehicles within range $X$ of $V_A$ for which $0 \leq TTC \leq Y$.

A transmitting device (e.g., vehicle) may include PH information in a BSM based on the following algorithm. The transmitting device may initialize a failed transmission parameter to 0 (TxFailed=0). After each transmission, the transmitting device may choose a real-valued number from 0 to 1 (e.g., use a random number generator (RNG) or pseudo-RNG to generate a real-valued number in the space [0 1]). The random number may be used as an approximation to determine if the transmission / BSM was received. The transmitting device may estimate if a particular sent transmission was received by using the random number; if the randomly generated number is lower than or equal to the determined CQI value, the failed transmission parameter is adjusted (e.g., incremented). To illustrate, the transmitting device may utilize the following step of set TxFailed=TxFailed+1 if rand()$\leq CQI_X$. If the randomly generated number is than the determined CQI value, then the estimation indicates the packet was received and the device can repeat the process to evaluate another BSM. In some implementations, the failed transmission parameter represents a consecutive failed transmission parameter. To illustrate, the parameter keeps track of only consecutive transmission failures. In such implementations, the transmitting device may reset the counter / failed transmission parameter each time a successful transmission is estimated/predicted or when the CQI value is greater than the randomly generated number. The failed transmission parameter may be compared to a threshold value to determine if PH information (or certificate information) should be sent. Additionally, in some implementations the threshold may be associated with or correspond to the amount of previous positions to send. For example, if the threshold is 5, a BSM includes PH of the past 5 positions when the transmitting device estimates 5 BSMs (or 5 consecutive BSMs) were not received.

Although CQI is used as an estimate for congestion and/or error rates, other parameters can be used in addition to or in the alternative of CQI. Such other or additional parameters include block error rate (BLER), PER, SINR, RSRP, congestion metrics, utilization metrics, etc.

Additionally, or alternatively, a base or standard inclusion rate may be increased to reduce the frequency at which path history and/or certificate information is included in safety messages. For example, certificate information is included every 450 ms in some standards (e.g., such as when a certificate may be changed or updated every 450 ms) and this inclusion rate may be relaxed. To illustrate, the UE may determine to increase the base inclusion frequency based on one or more operating conditions (e.g., CQI, PER, range, TTC, collision zone, etc.) or based on receiving a message from a network (e.g., an ITS control or setup message indicating to adjust the base inclusion rate/frequency), and the trigger condition for the inclusion of additional information may correspond to a timer for this extended or adjusted base inclusion rate/frequency. As an illustrative example, the certificate information trigger condition is a certificate change condition or timer. In response to the condition being satisfied or timer expiring, the UE determines to include certificate information in at least a next BSM.

Thus, in the example in FIG. 5, the wireless communication devices perform enhanced BSM reporting operations by utilizing dynamic information inclusion operations for BSM transmissions. Although the example in FIG. 5 is directed to an example with three devices, in other examples, additional devices and/or device types maybe used.

Additionally, or alternatively, one or more operations of FIGS. 3-5 may be added, removed, substituted in other implementations. For example, in some implementations, one or more of the example steps of FIGS. 4 and 5 may be used together. To illustrate, a trigger condition of FIG. 4 may be used with a trigger condition of FIG. 5.

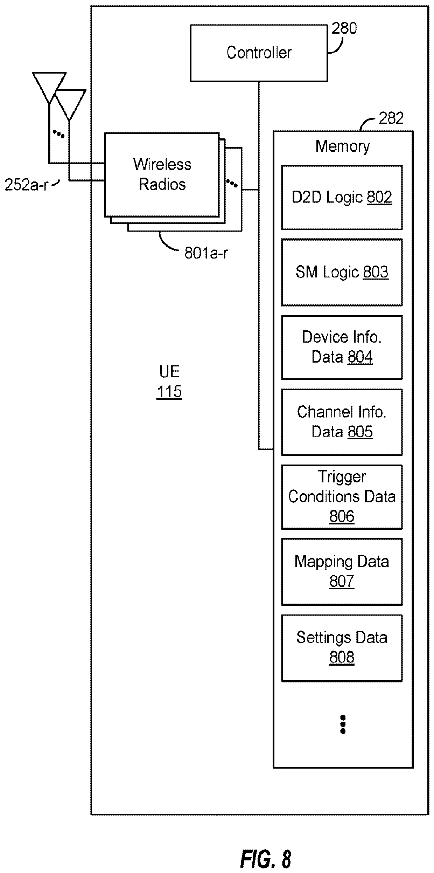

FIG. 6 is a flow diagram illustrating example blocks executed by a wireless communication device (e.g., a UE or base station) configured according to an aspect of the present disclosure. The example blocks will also be described with respect to UE 115 as illustrated in FIG. 8. FIG. 8 is a block diagram illustrating UE 115 configured according to one aspect of the present disclosure. UE 115 includes the structure, hardware, and components as illustrated for UE 115 of FIGS. 2 and/or 4. For example, UE 115 includes controller/processor 280, which operates to execute logic or computer instructions stored in memory 282, as well as controlling the components of UE 115 that provide the features and functionality of UE 115. UE 115, under control of controller/processor 280, transmits and receives signals via wireless radios 801a-r and antennas 252a-r. Wireless radios 801a-r includes various components and hardware, as illustrated in FIG. 2 for UE 115, including modulator/demodulators 254a-r, MIMO detector 256, receive processor 258, transmit processor 264, and TX MIMO processor 266. As illustrated in the example of FIG. 8, memory 282 stores device-to-device (D2D) logic 802 (e.g., C-V2X or ITS logic), safety message (SM) logic 803 (e.g., BSM logic), device information data 804 (e.g., temporary ID information), channel information data 805 (e.g., CQI), trigger conditions data 806 (e.g., path history trigger conditions, certificate trigger conditions, or a combination thereof), mapping data 807 (e.g., LDM data), and settings data 808. The data (802-808) stored in the memory 282 may include or correspond to the data (406, 408, 442, 444) stored in the memory 404 of FIG. 4.

At block 600, a wireless communication device, such as a UE (e.g., UE 115, UE 415A, or UE 415B) or a network device (e.g., a base station 105), receives a C-V2X message from another wireless communication device. For example, the UE 115 receives the message 452 of FIG. 4, the message 510 of FIG. 5, or the message 535 of FIG. 5 from another wireless communication device (e.g., UE 115a, UE 115b, UE 415A, UE 415B, or base station 105), as described with reference to FIGS. 4 and 5. To illustrate, a receiver (e.g., receive processor 258 or receiver 412) of the UE 115 receives a beacon message, a safety message (e.g., BSM), or other ITS message, via wireless radios 801a-r and antennas 252a-r, from UE 415A. The message may include device information, such as temporary ID information, as described with reference to FIGS. 3-5. The message may optionally include certificate information (e.g., full or particular certificate information) and/or path history information (e.g., second path history information) of the other wireless communication device. Additionally, or alternatively, the wireless communication device may determine channel condition information based on the message, such as a CQI, an estimated heading/trajectory/path for the other wireless communication device, a collision metric (e.g., collision zone overlap, TTC, range estimate, etc.), or a combination thereof.

At block 601, the UE 115 transmits a safety message including path history information responsive to determining a path history information trigger condition is satisfied based on the C-V2X message. For example, the UE 115 transmits the safety message 454 of FIG. 4 or the BSM 520 or BSM 525 of FIG. 5, as described with reference to FIGS. 4 and 5. To illustrate, a transmitter (e.g., transmit processor 220 or transmitter 410) of the UE 115 transmits a BSM including path history information, via wireless radios 801a-r and antennas 252a-r, in response to or based on any of the path history information trigger conditions described with reference to FIGS. 3-5 being satisfied. The BSM may be transmitted (broadcast) to multiple devices (including the other wireless communication device). Additionally, the wireless communication device may transmit additional BSMs including path history information based on determining the path history trigger condition is satisfied. These additional BSMs may have similar path history information to the original BSM and included updated path history information indicating updated positions.

The wireless communication device (e.g., UE or base station) may execute additional blocks (or the wireless communication device may be configured further perform additional operations) in other implementations. For example, the wireless communication device (e.g., the UE 115) may perform one or more operations described above. As another example, the wireless communication device (e.g., the UE 115) may perform one or more aspects as presented below.

In one or more aspects, techniques for supporting enhanced BSM reporting operations may include additional aspects, such as any single aspect or any combination of aspects described below or in connection with one or more other processes or devices described elsewhere herein. In a first aspect, supporting enhanced BSM reporting operations may include an apparatus configured to receive a C-V2X message from a wireless communication device (e.g., another wireless communication device). The apparatus is further configured to transmit a safety message including path history information responsive to determining a path history information trigger condition is satisfied based on the C-V2X message. Additionally, the apparatus may perform or operate according to one or more aspects as described below. In some implementations, the apparatus includes a wireless device, such as a UE. In some implementations, the apparatus may include at least one processor, and a memory coupled to the processor. The processor may be configured to perform operations described herein with respect to the apparatus. In some other implementations, the apparatus may include a non-transitory computer-readable medium having program code recorded thereon and the program code may be executable by a computer for causing the computer to perform operations described herein with reference to the apparatus. In some implementations, the apparatus may include one or more means configured to perform operations described herein. In some implementations, a method of wireless communication may include one or more operations described herein with reference to the apparatus.

In a second aspect, in combination with the first aspect, the path history information trigger condition includes a collision zone condition, a channel quality condition, a new vehicle condition, or a combination thereof.

In a third aspect, in combination with one or more of the first aspect or the second aspect, safety message transmissions which do not satisfy the path history information trigger condition do not include any path history information.

In a fourth aspect, in combination with one or more of the first aspect through the third aspect, the safety message includes a basic safety message (BSM), a Co-operative Awareness Message (CAM), or a Decentralized Environment Notification Message (DENM).

In a fifth aspect, in combination with one or more of the first aspect through the fourth aspect, the path history information includes multiple previous positions of the wireless communication device.

In a sixth aspect, in combination with one or more of the first aspect through the fifth aspect, the C-V2X message from the other wireless communication device includes a beacon message, a basic safety message (BSM), a Co-operative Awareness Message (CAM), or a Decentralized Environment Notification Message (DENM).

In a seventh aspect, in combination with one or more of the first aspect through the sixth aspect, the C-V2X message from the other wireless communication device includes second path history information of the other wireless communication device, and further including: determining, by the wireless communication device, a trajectory of the other wireless communication device (e.g., based on the second path history information, one or more past BSMs, heading info, path prediction of the other wireless communication device); and determining, by the wireless communication device, a range estimate (e.g., collision zone) for the other wireless communication device or a time to collision (TTC) estimate based on the trajectory of the other wireless communication device.

In an eighth aspect, in combination with one or more of the first aspect through the seventh aspect, the apparatus is configured to determine, by the wireless communication device, the path history information trigger condition is satisfied; and determine, by the wireless communication device, a number of safety message to include the path history information in based on determining that the path history information trigger condition is satisfied.

In a ninth aspect, in combination with one or more of the first aspect through the eighth aspect, the C-V2X message includes a temporary ID, and the apparatus is configured to: determine, by the wireless communication device, whether the temporary ID corresponds to a new or unknown device based on a local dynamic map (LDM); and determine, by the wireless communication device, to include the path history information in the safety message based on the temporary ID being associated with a new or unknown device.

In a tenth aspect, in combination with the ninth aspect, determine whether the temporary ID corresponds to the new or unknown device based on the LDM includes: comparing, by the wireless communication device, the temporary ID to stored temporary IDs of the LDM; comparing, by the wireless communication device, a predicted trajectory of the other wireless communication device to stored predicted trajectories of the LDM; and determining, by the wireless communication device, that the other wireless communication device is a new or unknown device by not matching the temporary ID or predicted trajectory with the stored temporary IDs or the stored predicted trajectories of the LDM.

In an eleventh aspect, in combination with one or more of the first aspect through the tenth aspect, the apparatus is configured to determine, by the wireless communication device, a range estimate (e.g., collision zone) for the other wireless communication device based on the C-V2X message; determine, by the wireless communication device, a time to collision (TTC) estimate based on the C-V2X message; compare, by the wireless communication device, the range estimate to a range condition; compare, by the wireless communication device, the TTC estimate to a TTC condition; and determine, by the wireless communication device, to include the path history information in the safety message based on the range estimate being less than the range condition, the TTC estimate being less than the TTC condition, or both.

In a twelfth aspect, in combination with one or more of the first aspect through the eleventh aspect, the path history information trigger condition is a CQI trigger condition, and the apparatus is configured to determine, by the wireless communication device, a CQI of the wireless communication device; compare, by the wireless communication device, the CQI to a CQI threshold; and determine, by the wireless communication device, that the CQI trigger condition is satisfied by the CQI being less than or equal to the CQI threshold.

In a thirteenth aspect, in combination with one or more of the first aspect through the twelfth aspect, the wireless communication device is a user equipment (UE).

In a fourteenth aspect, in combination with one or more of the first aspect through the thirteenth aspect, the wireless communication device is a host vehicle (HV). The other wireless communication device is a remote vehicle (RV).

Accordingly, wireless communication devices may perform enhanced safety message reporting operations and dynamic inclusion of path history information and/or certificate information in safety messages. By performing enhanced safety message operations or dynamic inclusion of path history information and/or certificate information in safety messages network performance can be increased by increasing throughput and reducing overhead and latency through the reduction of signaling overhead.

FIG. 7 is a flow diagram illustrating example blocks executed wireless communication device (e.g., a UE or base station) configured according to an aspect of the present disclosure. The example blocks will also be described with respect to UE 115 as illustrated in FIG. 8.

FIG. 8 is a block diagram illustrating UE 115 configured according to one aspect of the present disclosure. UE 115 includes the structure, hardware, and components as illustrated for UE 115 of FIGS. 2 and/or 4 and as described above with reference to FIG. 6.

At block 700, a wireless communication device, such as a UE (e.g., UE 115, UE 415A, or UE 415B) or a network device (e.g., a base station 105), receives a C-V2X message from another wireless communication device. For example, the UE 115 receives the message 452 of FIG. 4, the message 510 of FIG. 5, or the message 535 of FIG. 5 from another wireless communication device (e.g., UE 115a, UE 115b, UE 415A, UE 415B, or base station 105), as described with reference to FIGS. 4 and 5. To illustrate, a receiver (e.g., receive processor 258 or receiver 412) of the UE 115 receives a beacon message, safety message (e.g., BSM), or other ITS message, via wireless radios 801a-r and antennas 252a-r, from UE 415A. The message may include device information, such as temporary ID information, as described with reference to FIGS. 3-5. The message may optionally include certificate information (e.g., full or particular certificate information) and/or path history information (e.g., second path history information) of the other wireless communication device. Additionally, or alternatively, the wireless communication device may determine channel condition information based on the message, such as a CQI, an estimated heading/trajectory/path for the other wireless communication device, a collision metric (e.g., collision zone overlap, TTC, range estimate, etc.), or a combination thereof.

At block 701, the wireless communication device transmits a safety message including certificate information responsive to determining a certificate information trigger condition is satisfied based on the C-V2X message. For example, the wireless communication device transmits the safety message 454 of FIG. 4, or the BSM 545 or BSM 550 of FIG. 5 including certificate information, as described with reference to FIGS. 4 and 5. To illustrate, a transmitter (e.g., transmit processor 220 or transmitter 410) of the UE 115 transmits a BSM including a full certificate via wireless radios 801a-r and antennas 252a-r, in response to or based on any of the certificate information trigger conditions described with reference to FIGS. 3-5 being satisfied. The BSM may be transmitted (broadcast) to multiple devices. Additionally, the wireless communication device may transmit additional BSMs including the certificate information based on determining the certificate information trigger condition is satisfied.

The wireless communication device (e.g., such as a UE or base station) may execute additional blocks (or the wireless communication device may be configured further perform additional operations) in other implementations. For example, the wireless communication device may perform one or more operations described above. As another example, the wireless communication device may perform one or more aspects as described with reference to FIGS. 3-8.

In one or more aspects, techniques for supporting enhanced BSM reporting operations may include additional aspects, such as any single aspect or any combination of aspects described below or in connection with one or more other processes or devices described elsewhere herein. In a first aspect, supporting enhanced BSM reporting operations may include an apparatus configured to receive a C-V2X message from a wireless communication device (e.g., another wireless communication device). The apparatus is further configured to transmit a safety message including certificate information responsive to determining a certificate information trigger condition is satisfied based on the C-V2X message. Additionally, the apparatus may perform or operate according to one or more aspects as described below. In some implementations, the apparatus includes a wireless device, such as a base station. In some implementations, the apparatus may include at least one processor, and a memory coupled to the processor. The processor may be configured to perform operations described herein with respect to the apparatus. In some other implementations, the apparatus may include a non-transitory computer-readable medium having program code recorded thereon and the program code may be executable by a computer for causing the computer to perform operations described herein with reference to the apparatus. In some implementations, the apparatus may include one or more means configured to perform operations described herein. In some implementations, a method of wireless communication may include one or more operations described herein with reference to the apparatus.

In a second aspect, in combination with the first aspect, the certificate information trigger condition includes, a ranged condition, a time to collision condition, a new vehicle condition, a timer condition, a critical event condition, or a combination thereof.

In a third aspect, in combination with one or more of the first aspect through the second aspect, the apparatus is configured to determine, by the wireless communication device, the certificate information trigger condition is not satisfied; refrain, by the wireless communication device, from including the certificate information in a second BSM based on determining the certificate information trigger condition is not satisfied; and send, by the wireless communication device, the second BSM without the certificate information.

In a fourth aspect, in combination with one or more of the first aspect through the third aspect. The partial certificate information includes a digest of the certificate information. In a particular implementation the digest indicated or identifies the certificate information (e.g., a previously sent full certificate).. In another particular implementation the digest includes or indicates message source authentication information, integrity check information, or both.

In a fifth aspect, in combination with one or more of the first aspect through the fourth aspect, the safety message includes a basic safety message (BSM), a Co-operative Awareness Message (CAM), or a Decentralized Environment Notification Message (DENM).

In a sixth aspect, in combination with one or more of the first aspect through the fifth aspect, the certificate information includes a full certificate.

In a seventh aspect, in combination w with one or more of the first aspect through the sixth aspect, the C-V2X message from the other wireless communication device includes a beacon message, a basic safety message (BSM), a Co-operative Awareness Message (CAM), or a Decentralized Environment Notification Message (DENM).

In an eighth aspect, in combination with one or more of the first aspect through the seventh aspect, the C-V2X message from the other wireless communication device includes second path history information of the other wireless communication device, and the apparatus is configured to determine, by the wireless communication device, a trajectory of the other wireless communication device (e.g., based on the second path history information, one or more past BSMs, heading info, path prediction of the other wireless communication device); and determine, by the wireless communication device, a range estimate (e.g., collision zone) for the other wireless communication device or a time to collision (TTC) estimate based on the trajectory of the other wireless communication device.

In a ninth aspect, in combination with one or more of the first aspect through the eighth aspect, the C-V2X message includes a temporary ID, and the apparatus is configured to determine, by the wireless communication device, whether the temporary ID corresponds to a new or unknown device based on a local dynamic map (LDM); determine, by the wireless communication device, whether a range or TTC associated with the new or unknown device satisfies a range condition, a TTC condition, or both; and determine, by the wireless communication device, to include the certificate information in the safety message based on the temporary ID being associated with the new or unknown device and the new or unknown device satisfying the range condition, the TTC condition, or both.

In a tenth aspect, in combination with one or more of the first aspect through the ninth aspect, the certificate information trigger condition is a CQI trigger condition, and the apparatus is configured to determine, by the wireless communication device, a CQI of the wireless communication device; compare, by the wireless communication device, the CQI to a CQI threshold; determine, by the wireless communication device, whether the CQI trigger condition is satisfied by the CQI being less than or equal to the CQI threshold; and determine, by the wireless communication device, to include the certificate information in the safety message based on determining that the CQI trigger condition is satisfied by the CQI being less than or equal to the CQI threshold.

In an eleventh aspect, in combination with one or more of the first aspect through the tenth aspect, the certificate information trigger condition is a certificate change condition, and the apparatus is configured to determine, by the wireless communication device, a certificate inclusion frequency for a base frequency (e.g., standard or base inclusion frequency) for the inclusion of the certificate information after a certificate change. The frequency is greater than 450 ms; setting, by the wireless communication device, a timer based on the certificate inclusion frequency; and determine, by the wireless communication device, to include the certificate information in the safety message based on expiration of the timer.

In a twelfth aspect, in combination with one or more of the first aspect through the eleventh aspect, the certificate inclusion frequency is 2 seconds or greater.

In a thirteenth aspect, in combination with one or more of the first aspect through the twelfth aspect, the apparatus is configured to determine, by the wireless communication device, a critical event. The critical event includes an acceleration event, a deceleration event, a change in direction event, activation of a safety system (e.g., ABS, traction control, drive assist), or a combination thereof; and determine, by the wireless communication device, to include the certificate information in the safety message based on detecting the critical event.

In a fourteenth aspect, in combination with one or more of the first aspect through the thirteenth aspect, the wireless communication device is operating in a Society of Automotive engineers (SAE) International or a European Telecommunications Standards Institute (ETSI) Intelligent Transportation System (ITS) mode.

In some aspects implementations, the other wireless communication device, such as another UE or base station transmits the C-V2X message to the wireless communication device; and receives, from the wireless communication device, a safety message including path history information responsive to determining a path history information trigger condition is satisfied based on the C-V2X message or including certificate information responsive to determining a certificate information trigger condition is satisfied based on the C-V2X message.

Accordingly, wireless communication devices may perform enhanced safety message reporting operations and dynamic inclusion of path history information and/or certificate information in safety messages. By performing enhanced safety message operations or dynamic inclusion of path history information and/or certificate information in safety messages network performance can be increased by increasing throughput and reducing overhead and latency through the reduction of signaling overhead.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Components, the functional blocks, and the modules described herein with respect to FIGS. 1-8 include processors, electronics devices, hardware devices, electronics components, logical circuits, memories, software codes, firmware codes, among other examples, or any combination thereof. Software shall be construed broadly to mean instructions, instruction sets, code, code segments, program code, programs, subprograms, software modules, application, software applications, software packages, routines, subroutines, objects, executables, threads of execution, procedures, and/or functions, among other examples, whether referred to as software, firmware, middleware, microcode, hardware description language or otherwise. In addition, features discussed herein may be implemented via specialized processor circuitry, via executable instructions, or combinations thereof.

Those of skill would further appreciate that the various illustrative logical blocks, modules, circuits, and algorithm steps described in connection with the disclosure herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure. Skilled artisans will also readily recognize that the order or combination of components, methods, or interactions that are described herein are merely examples and that the components, methods, or interactions of the various aspects of the present disclosure may be combined or performed in ways other than those illustrated and described herein.

The various illustrative logics, logical blocks, modules, circuits and algorithm processes described in connection with the implementations disclosed herein may be implemented as electronic hardware, computer software, or combinations of both. The interchangeability of hardware and software has been described generally, in terms of functionality, and illustrated in the various illustrative components, blocks, modules, circuits and processes described above. Whether such functionality is implemented in hardware or software depends upon the particular application and design constraints imposed on the overall system.

The hardware and data processing apparatus used to implement the various illustrative logics, logical blocks, modules and circuits described in connection with the aspects disclosed herein may be implemented or performed with a general purpose single- or multi-chip processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, or, any conventional processor, controller, microcontroller, or state machine. In some implementations, a processor may be implemented as a combination of computing devices, such as a combination of a DSP and a microprocessor, a plurality of microprocessors, one or more microprocessors in conjunction with a DSP core, or any other such configuration. In some implementations, particular processes and methods may be performed by circuitry that is specific to a given function.

In one or more aspects, the functions described may be implemented in hardware, digital electronic circuitry, computer software, firmware, including the structures disclosed in this specification and their structural equivalents thereof, or in any combination thereof. Implementations of the subject matter described in this specification also may be implemented as one or more computer programs, that is one or more modules of computer program instructions, encoded on a computer storage media for execution by, or to control the operation of, data processing apparatus.

If implemented in software, the functions may be stored on or transmitted over as one or more instructions or code on a computer-readable medium. The processes of a method or algorithm disclosed herein may be implemented in a processor-executable software module which may reside on a computer-readable medium. Computer-readable media includes both computer storage media and communication media including any medium that may be enabled to transfer a computer program from one place to another. A storage media may be any available media that may be accessed by a computer. By way of example, and not limitation, such computer-readable media may include random-access memory (RAM), read-only memory (ROM), electrically erasable programmable read-only memory (EEPROM), CD-ROM or other optical disk storage, magnetic disk storage or other magnetic storage devices, or any other medium that may be used to store desired program code in the form of instructions or data structures and that may be accessed by a computer. Also, any connection may be properly termed a computer-readable medium. Disk and disc, as used herein, includes compact disc (CD), laser disc, optical disc, digital versatile disc (DVD), floppy disk, and Blu-ray disc where disks usually reproduce data magnetically, while discs reproduce data optically with lasers. Combinations of the above should also be included within the scope of computer-readable media. Additionally, the operations of a method or algorithm may reside as one or any combination or set of codes and instructions on a machine readable medium and computer-readable medium, which may be incorporated into a computer program product.

Various modifications to the implementations described in this disclosure may be readily apparent to those skilled in the art, and the generic principles defined herein may be applied to some other implementations without departing from the spirit or scope of this disclosure. Thus, the claims are not intended to be limited to the implementations shown herein, but are to be accorded the widest scope consistent with this disclosure, the principles and the novel features disclosed herein.

Additionally, a person having ordinary skill in the art will readily appreciate, the terms "upper" and "lower" are sometimes used for ease of describing the figures, and indicate relative positions corresponding to the orientation of the figure on a properly oriented page, and may not reflect the proper orientation of any device as implemented.

Certain features that are described in this specification in the context of separate implementations also may be implemented in combination in a single implementation. Conversely, various features that are described in the context of a single implementation also may be implemented in multiple implementations separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. Further, the drawings may schematically depict one more example processes in the form of a flow diagram. However, other operations that are not depicted may be incorporated in the example processes that are schematically illustrated. For example, one or more additional operations may be performed before, after, simultaneously, or between any of the illustrated operations. In certain circumstances, multitasking and parallel processing may be advantageous. Moreover, the separation of various system components in the implementations described above should not be understood as requiring such separation in all implementations, and it should be understood that the described program components and systems may generally be integrated together in a single software product or packaged into multiple software products. Additionally, some other implementations are within the scope of the following claims. In some cases, the actions recited in the claims may be performed in a different order and still achieve desirable results.

As used herein, including in the claims, the term "or," when used in a list of two or more items, means that any one of the listed items may be employed by itself, or any combination of two or more of the listed items may be employed. For example, if a composition is described as containing components A, B, or C, the composition may contain A alone; B alone; C alone; A and B in combination; A and C in combination; B and C in combination; or A, B, and C in combination. Also, as used herein, including in the claims, "or" as used in a list of items prefaced by "at least one of" indicates a disjunctive list such that, for example, a list of "at least one of A, B, or C" means A or B or C or AB or AC or BC or ABC (that is A and B and C) or any of these in any combination thereof. The term "substantially" is defined as largely but not necessarily wholly what is specified (and includes what is specified; for example, substantially 90 degrees includes 90 degrees and substantially parallel includes parallel), as understood by a person of ordinary skill in the art. In any disclosed implementations, the term "substantially" may be substituted with "within [a percentage] of" what is specified, where the percentage includes .1, 1, 5, or 10 percent.

The previous description of the disclosure is provided to enable any person skilled in the art to make or use the disclosure. Various modifications to the disclosure will be readily apparent to those skilled in the art, and the generic principles defined herein may be applied to other variations without departing from the spirit or scope of the disclosure. Thus, the disclosure is not intended to be limited to the examples and designs described herein but is to be accorded the widest scope consistent with the principles and novel features disclosed herein.

**Claims**

1. A method of wireless communication comprising:

   receiving, by a wireless communication device, a cellular vehicle-to-everything, C-V2X, message from another wireless communication device; and
   transmitting, by the wireless communication device, a safety message including certificate information responsive to determining a certificate information trigger condition is satisfied based on the C-V2X message.

2. The method of claim 1, wherein the certificate information trigger condition comprises a ranged condition, a time to collision condition, a new vehicle condition, a timer condition, a critical event condition, or a combination thereof.

3. The method of claim 1, further comprising:

   determining, by the wireless communication device, the certificate information trigger condition is not satisfied;
   refraining, by the wireless communication device, from including the certificate information in a second safety message based on determining the certificate information trigger condition is not satisfied; and
   sending, by the wireless communication device, the second safety message without the certificate information.

4. The method of claim 3, wherein the second safety message includes partial certificate information, and wherein the partial certificate information comprises a digest of the certificate information.

5. The method of claim 1, wherein the safety message comprises a basic safety message, BSM, a Co-operative Awareness Message, CAM, or a Decentralized Environment Notification Message, DENM.

6. The method of claim 1, wherein the certificate information comprises a full certificate.

7. The method of claim 1, wherein the C-V2X message from the other wireless communication device comprises a beacon message, a basic safety message, BSM, a Co-operative Awareness Message, CAM, or a Decentralized Environment Notification Message, DENM.

8. The method of claim 1, wherein the C-V2X message from the other wireless communication device includes second path history information of the other wireless communication device, and further comprising:

   determining, by the wireless communication device, a trajectory of the other wireless communication device;
   determining, by the wireless communication device, a range estimate for the other wireless communication device or a time to collision, TTC, estimate based on the trajectory of the other wireless communication device; and
   determining, by the wireless communication device, to include the certificate information in the safety message based on the range estimate or the TTC estimate.

9. An apparatus comprising:

   at least one transceiver;
   a memory; and
   at least one processor coupled to the at least one transceiver and the memory, the at least one processor configured to:

receive, via the at least one transceiver, a cellular vehicle-to-everything, C-V2X, message from a wireless communication device; and

transmit, via at least one transceiver, a safety message including certificate information responsive to determining a certificate information trigger condition is satisfied based on the C-V2X message.

10. The apparatus of claim 9, wherein the C-V2X message includes a temporary ID, and wherein the at least one processor is further configured to:

determine whether the temporary ID corresponds to a new or unknown device based on a local dynamic map, LDM;

determine whether a range or time to collision, TTC, associated with the new or unknown device satisfies a range condition, a TTC condition, or both; and

determine to include the certificate information in the safety message based on the temporary ID being associated with the new or unknown device and the new or unknown device satisfying the range condition, the TTC condition, or both.

11. The apparatus of claim 9, wherein the certificate information trigger condition is a channel quality indicator, CQI, trigger condition, and wherein the at least one processor is further configured to:

determine a CQI of the apparatus;

compare the CQI to a CQI threshold;

determine whether the CQI trigger condition is satisfied by the CQI being less than or equal to the CQI threshold; and

determine to include the certificate information in the safety message based on determining that the CQI trigger condition is satisfied by the CQI being less than or equal to the CQI threshold.

12. The apparatus of claim 11, wherein the certificate information trigger condition is a certificate change condition, and wherein the at least one processor is further configured to:

determine a certificate inclusion frequency for a base frequency for inclusion of the certificate information after a certificate change, wherein the base frequency is greater than 450 milliseconds;

set a timer based on the certificate inclusion frequency; and

determine to include the certificate information in the safety message based on expiration of the timer.

13. The apparatus of claim 12, wherein the certificate inclusion frequency is 2 seconds or greater.

14. The apparatus of claim 11, wherein the at least one processor is further configured to:

determine a critical event, wherein the critical event comprises an acceleration event, a deceleration event, a change in direction event, activation of a safety system; and

determine to include the certificate information in the safety message based on detecting the critical event.

15. The apparatus of claim 11, wherein the apparatus is operating in Society of Automotive engineers, SAE, International or a European Telecommunications Standards Institute, ETSI, Intelligent Transportation System, ITS, mode.

**FIG. 1**

EP 4 510 650 A2

**FIG. 2**

Device-to-Device
Communications System

*FIG. 3A*

EP 4 510 650 A2

EP 4 510 650 A2

*FIG. 3B*

*FIG. 4*

**FIG. 5**

EP 4 510 650 A2

```
┌────────────────────────────────────────┐ 600
│ Receive a C-V2X message from another   │
│ wireless communication device.          │
└────────────────────────────────────────┘
                     │
                     ▼
┌────────────────────────────────────────┐ 601
│ Transmit a safety message including     │
│ path history information responsive to  │
│ determining a path history information  │
│ trigger condition is satisfied based on │
│ the C-V2X message.                      │
└────────────────────────────────────────┘
```

**FIG. 6**

```
┌────────────────────────────────────────┐ 700
│ Receive a C-V2X message from another   │
│ wireless communication device.          │
└────────────────────────────────────────┘
                     │
                     ▼
┌────────────────────────────────────────┐ 701
│ Transmit a safety message including     │
│ certificate information responsive to   │
│ determining a certificate information   │
│ trigger condition is satisfied based on │
│ the C-V2X message.                      │
└────────────────────────────────────────┘
```

**FIG. 7**

*FIG. 8*

**REFERENCES CITED IN THE DESCRIPTION**

**Patent documents cited in the description**

- US 64697622